# FASCICULE DE BREVET EUROPEEN

(11) **EP 1 242 492 B1**
(45) Date de publication et mention de la délivrance du brevet: **17.05.2006**
(21) Numéro de dépôt: 00990042.4
(22) Date de dépôt: 08.12.2000
(51) Int. Cl.: C08F 293/00

(54) **LATEX A CHIMIE DE SURFACE MODIFIEE ET POUDRES REDISPERSABLES, LEUR OBTENTION ET LEURS UTILISATIONS**
LATEX MIT MODIFIZIERTER OBERFLÄCHENCHEMIE UND REDISPERGIERBARE PULVER, IHRE HERSTELLUNG UND ANWENDUNGEN
SURFACE CHEMISTRY MODIFIED LATEX AND RESDISPERSIBLE POWDERS, PRODUCTION AND USE THEREOF

(30) Priorité: 10.12.1999 FR 9915714
(43) Date de publication de la demande: 25.09.2002
(73) Titulaire: RHODIA CHIMIE, 92512 Boulogne Billancourt Cedex (FR)
(72) Inventeur: BETT, William, F-75012 Paris (FR); CASTAING, Jean-Christophe, F-75019 Paris (FR); D'ALLEST, Jean-François, F-68100 Mulhouse (FR)
(74) Mandataire: Andrieu, Isabelle A. J.
(86) Numéro de dépôt international: PCT/FR2000/003454
(87) Numéro de publication internationale: WO 2001/042325

(56) Documents cités:
- EP-A- 0 296 850
- EP-A- 0 421 149
- WO-A-98/01478
- WO-A-98/58974
- US-A- 5 314 962

## Description

La présente invention a pour objet un latex à chimie de surface modifiée, ainsi des poudres redispersables susceptibles d'être obtenues à partir desdits latex.

Elle concerne de même l'obtention des latex et poudres.

Enfin, l'invention a pour objet des formulations destinées à des applications dans les matériaux de construction, les adhésifs, les peintures, les papiers, comprenant les latex ou les poudres, ainsi que l'utilisation des latex ou des poudres dans de telles formulations.

Les latex sont des produits bien connus de l'homme de l'art, de même que les poudres redispersables obtenues à partir de ces latex. Ils trouvent de nombreuses applications, notamment comme additifs dans des formulations pour peintures, pour papier (bains de couchage, papier masse) ou bien dans des formulations destinées à être appliquées dans le domaine du bâtiment (adhésif, colles, enduits de lissage, etc.). Ils confèrent des propriétés importantes aux formules dans la composition desquelles ils entrent, grâce, par exemple, à leur pouvoir liant, à leur pouvoir filmogène, et à leur capacité à conférer des propriétés rhéologiques particulières.

Cependant, dans le cas de certaines formules, comme les formules de peintures aqueuses par exemple, on se trouve devant la nécessité de satisfaire deux exigences contradictoires. Ainsi, dans ces formules de peinture riches en pigments, le latex utilisé comme liant doit à la fois présenter une bonne stabilité colloïdale dans la peinture humide (avant séchage), afin d'éviter qu'il n'y ait une augmentation de la viscosité pendant le stockage, et, à l'état sec, avoir une bonne adhésion sur les pigments, afin que la couche de peinture ait les caractéristiques mécaniques souhaitées. Or, on a montré, qu'un des phénomènes intervenant dans l'augmentation de la viscosité au stockage, est l'adsorption en humide des latex sur les pigments. Ces deux propriétés sont donc a priori antinomiques, puisque pour satisfaire à la première on cherche à diminuer les interactions latex/charge, alors qu'il faut les favoriser pour satisfaire à la seconde.

De manière générale, pour toutes les applications des latex, on cherche à concilier une bonne stabilité colloïdale des formules aqueuses avant séchage, et une bonne résistance à l'eau après séchage.

Jusqu'à maintenant, les solutions apportées pour résoudre le problème de stabilité colloïdale, consistaient à introduire lors de la synthèse des latex, une quantité suffisamment importante de monomères, ou bien encore de leur greffer des macromonomères hydrophiles. Cependant, la présence de ces espèces hydrophiles a pour conséquence d'altérer les propriétés de résistance à l'eau du latex final, donc de nuire à la deuxième exigence. Cette solution n'est donc pas totalement satisfaisante.

En ce qui concerne les poudres redispersables, il est à noter que ces dernières doivent pouvoir être facilement redispersées dans des milieux aqueux, tout en conservant une certaine insensibilité à l'eau. Les poudres redipersables sont en général obtenues par séchage des latex, en présence d'un adjuvant de séchage. Cependant, même si les poudres ainsi obtenues présentent de bonnes propriétés de redispersion, la présence de cet adjuvant de séchage, qui est mis en oeuvre avec des quantités importantes (de l'ordre de 10 à 20 % par rapport au latex), est à l'origine de difficulté de mise en oeuvre ultérieure des formules qui les contiennent. Par exemple, dans le cas de formulations destinés à des applications dans la bâtiment, la présence de cet adjuvant peut entraîner des retards de prise, une décoloration de la formulation, une sensibilité à l'eau, à la chaleur, etc.

Là encore, il reste à trouver un compromis satisfaisant.

L'un des buts de la présente invention est de proposer un latex à chimie de surface modifiée, des poudres redispersables, permettant de résoudre les problèmes énoncés ci-dessus.

Ainsi, les latex selon la présente invention présentent une stabilité accrue dans des formulations de peintures.

De même, on a constaté que les poudres redispersables obtenues à partir de ces latex présentent une redispersabilité accrue par rapport à celles issus de latex obtenus par des méthodes conventionnelles à partir des même monomères dans les mêmes proportions.

En outre, on a remarqué de manière tout à fait inattendue, que les poudres redispersables obtenues selon l'invention ne nécessitent plus l'emploi de teneurs aussi élevées en adjuvant de séchage, que celles classiquement mises en oeuvre pour obtenir une bonne redispersion.

Notons, de plus, que les latex introduits dans des formulations pour peintures, matériaux de construction, papiers, présentent un bon pouvoir liant sec et humide.

Ces buts et d'autre sont atteints par la présente invention qui a donc pour objet un latex à chimie de surface modifiée, susceptible d'être obtenu en effectuant une polymérisation radicalaire en émulsion, en présence :
- d'au moins un monomère éthyléniquement insaturé ou au moins un polymère possédant des liaisons éthyléniquement insaturées résiduelles,
- d'au moins un initiateur de polymérisation radicalaire,
- d'au moins un polymère monobloc, dibloc ou tribloc, soluble et/ou dispersable dans l'eau, comprenant à son extrémité un groupement actif, susceptible de former un radical, et choisi parmi les thioethers-thiones, dithiocarbamates, xanthates.

Elle a de même pour objet des poudres redispersables susceptibles d'être obtenues par séchage des latex.

Elle concerne de même des formulations destinées à être appliquées dans les matériaux de construction, dans celui des peintures, dans celui des papiers, .dans celui des adhésifs et adhésifs sensibles à la pression et comprenant le latex ou les poudres redispersables.

Elle concerne de même l'utilisation des latex et poudres redispersables dans des formulations destinées à être utilisées dans le domaine du bâtiment, dans celui des peintures.

Mais d'autres avantages et caractéristiques de la présente invention apparaîtront plus clairement à la lecture de la description et des exemples qui vont suivre.

Comme cela a été indiqué auparavant, le procédé selon l'invention consiste à mettre en oeuvre une polymérisation radicalaire en présence d'un polymère monobloc, dibloc ou tribloc, soluble et/ou dispersable dans l'eau, comprenant à son extrémité un groupement actif, susceptible de former un radical, et choisi parmi les thioethers-thionés, dithiocarbamates, xanthates.

Des émulsions aqueuses adaptées pour la préparation de revêtements de type peintures est décrite dans la demande WO 98/01478. Ces émulsions sont obtenues par polymérisation radicalaire en émulsion de monomères éthyléniquement insaturés, de radicaux libres et d'espèces dithioesters.

Dans WO 98/01478, la possible mise en oeuvre d'autres espèces que des dithioesters, en particulier des thioethers-thiones, dithiocarbamates ou xanthates, n'est nullement envisagée.

Un polymère est considéré dispersable et/ou soluble dans l'eau, selon l'invention, s'il a les comportements suivants :
1) A l'échelle macroscopique :
   on ne constate pas, pour au moins 90 % de la solution/dispersion, de décantation ni de séparation de phases macroscopiques d'une solution/dispersion comprenant 10 à 50 % en poids de polymère, à une échelle de temps de 7 jours.
2) A l'échelle microscopique :
   2.1) soit le polymère ne s'associe pas à l'échelle microscopique et se présente sous forme de chaînes individuelles ;
   2.2) soit le polymère s'associe, à l'échelle microscopique, localement, pour former des agrégats ou micelles, à la manière des polymères associatifs ou des tensioactifs.

Dans ce dernier cas, il ne s'agit pas de structures gelées. Il est rappelé que ce terme signifie que le temps de séjour moyen d'une chaîne individuelle à l'intérieur de cette structure gelée, est d'au moins 15 minutes.

Selon un premier mode de réalisation de la présente invention, le polymère mono-, di- ou tribloc correspond à la formule suivante :

(R¹¹)x-Z¹¹-C(=S)-Z¹²-[A]-R¹² (I)

formule dans laquelle :
- Z¹¹ représente C, N, ou O,
- Z¹² représente S,
- R¹¹ et R1², identiques ou différents, représentent :
   .un groupe (i) alkyle, acyle, aryle, alcène ou alcyne éventuellement substitué, ou
   . un cycle (ii) carboné, saturé ou non, éventuellement substitué ou aromatique, ou
   . un hétérocycle (iii), saturé ou non, éventuellement substitué,
   ces groupes et cycles (i), (ii) et (iii) pouvant être substitués par des groupes phényles substitués, des groupes aromatiques substitués ou des groupes : alkoxycarbonyle ou arytoxycarbonyte (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, les groupes présentant un caractère hydrophile ou ionique tels que les sels alcalins d'acides carboxyliques, les sels atcatins d'acide sulfoniqpe, les chaînes polyoxyde d'alkylène (POE, POP), les substituants cationiques (sels d'ammonium quaternaires),
   R représentant un groupe alkyle ou aryle,
- x correspond à la valence de Z¹¹ ou bien
- x vaut 0 et dans ce cas, Z¹¹ représente un radical phényle, alcène, ou alcyne, éventuellement substitué par un groupe alkyle ; acyle ; aryle ; alcène ou alcyne éventuellement substitué ; un cycle carboné éventuellement substitué, saturé, insaturé, ou aromatique ; un hétérocycle éventuellement substitué, saturé ou insaturé ; des groupes alkoxycarbonyl ou aryloxycarbonyl (-COOR) ; carboxy (-COOH) ; acyloxy (-O₂CR) ; carbamoyle (-CONR₂) ; cyano (-CN) ; alkylcarbonyle ; alkylarylcarbonyle ; arylcarbonyle ; arylalkylcarbonyle ; phtalimido ; maleïmido ; succinimido ; amidino ; guanidimo ; hydroxy (-OH) ; amino (-NR₂) ; halogène ; allyle ; époxy ; alkoxy (-OR), S-alkyle ; S-aryle ; des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires) ;
- A représente un polymère mono, di ou tribloc.

Selon une variante avantageuse de l'invention, le composé de formule (I) est tel que Z¹¹ est un atome d'oxygène et Z¹² est un atome de soufre. Ces composés sont donc fonctionnalisés en bout de chaîne par des xanthates.

Quant au polymère A, ce dernier correspond plus particulièrement à au moins l'une des trois formules ci-dessous : 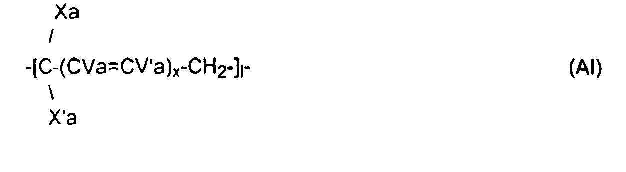 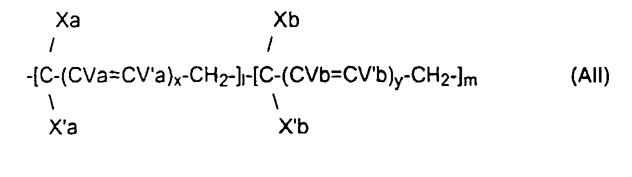 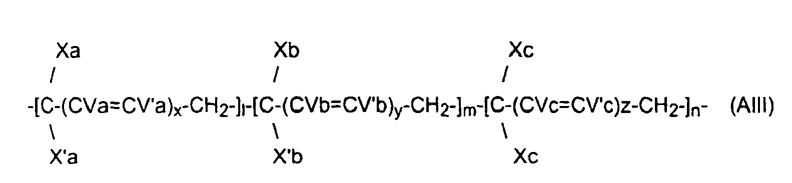 formules dans lesquelles :
- Va, V'a, Vb, V'b, Vc, V'c, identiques ou différents, représentent : H, un groupe alkyle ou un halogène,
- Xa, X'a, Xb, X'b, Xc, X'c, identiques ou différents, représentent H, un halogène ou un groupe R, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- l, m, n, identiques ou différents, supérieurs ou égaux à 1,
- x, y, z, identiques ou différents, sont égaux à 0 ou 1.

Plus particulièrement, le polymère A est obtenu en mettant en oeuvre au moins un monomère éthyléniquement insaturé choisi parmi les monomères hydrophiles.

A titre d'exemple de tels monomères, on peut notamment citer
- les acides mono- et di- carboxyliques insaturés éthyléniques comme l'acide acrylique, l'acide méthacrylique, l'acide itaconique, l'acide maléique, l'acide fumarique,
- les mono-alkylesters des acides dicarboxyliques du type cité avec les alcanols ayant de préférence 1 à 4 atomes de carbone et leurs dérivés N-substitués, comme par exemple l'acrylate ou le méthacrylate de 2-hydroxyéthyle,
- les amides des acides carboxyliques insaturés comme l'acrylamide, le méthacrylamide,
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylène-méthacrylate,

Il est bien évidemment possible de faire entrer dans la composition des polymères, une proportion de monomères hydrophobes, dès l'instant que les conditions de solubilité / dispersité et de non formation de micelles gelées ou non, indiquées auparavant, restent vérifiées.

A titre d'illustration de monomères hydrophobes, on peut citer notamment le styrène ou ses dérivés, le butadiène, le chloroprène, les esters (méth)acryliques, les esters vinyliques et les nitriles vinyliques.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Il est à noter que le styrène peut être remplacé en totalité ou en partie par des dérivés tels que l'alphaméthylstyrène ou le vinyltoluène.

Les autres monomères éthyléniquement insaturés, utilisables seuls ou en mélanges, ou copolymérisables avec les monomères ci-dessus sont notamment :
- les esters vinyliques d'acide carboxylique comme l'acétate de vinyle, le versatate de vinyle, le propionate de vinyle,
- les halogénures de vinyle,
- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou -méthacrylamide. Il est de même possible d'utiliser des monomères, zwitterioniques comme par exemple l'acrylate de sulfopropyl (diméthyl)aminopropyle.

Selon un mode de réalisation particulièrement avantageux, le polymère A est un monobloc ou un dibloc.

Notons de plus que le polymère A présente plus particulièrement une masse molaire en nombre inférieure à 20000, de préférence inférieure à 10000. Ces masses molaire sont mesurées par chromatographie d'exclusion stérique, en utilisant le polyéthylène glycol comme étalon.

Ce type de polymère mono-, di-, ou tribloc possédant une extrémité réactive est connu de l'homme de l'art et a notamment fait l'objet des demandes de brevets WO 98/58974 et WO 99/35178.

On pourra donc se référer à la description de ces deux demandes de brevets pour les définitions préférées des divers groupements et radicaux, de même que pour leur préparation.

Selon un deuxième mode de réalisation de l'invention, on utilise, en tant que polymère mono-, di- ou tribloc, un polymère correspondant aux formules suivantes : 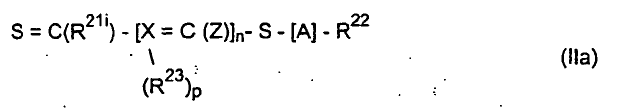 et/ou : 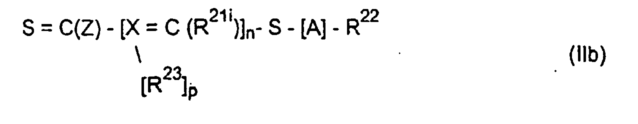 formules dans lesquelles :
- X représente un atome choisi parmi C,
- R²² représente :
   - un groupe (i) alkyle, acyle, aryle, alcène ou alcyne éventuellement substitué, ou
   - un cycle (ii) carboné, saturé ou non, éventuellement substitué ou aromatique, ou
   - un hétérocycle (iii), saturé ou non, éventuellement substitué ou aromatique,
      ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
      R représentant un groupe alkyle ou aryle,
- Z, R²¹ⁱ, R²³, identiques ou différents, sont choisis parmi :
   - un atome d'hydrogène,
   - un groupe alkyle, acyle, aryle, alcène ou alcyne éventuellement substitué,
   - un cycle carboné saturé ou non, éventuellement substitué ou aromatique,
   - un hétérocycle saturé ou non, éventuellement substitué,
   - des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
   - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
- n>0,
- i varie de 1 à n,
- p égale 0, 1 ou 2 selon la valence de X
   de plus,
- si X = C, alors Z n'est pas un groupe S-alkyle ou S-aryle,
- le groupe R¹ⁱ, avec i = n, n'est pas un groupe S-alkyle ou S-aryle.
- A représente un polymère mono, di ou tribloc tel que défini auparavant.

La définition du polymère A décrite dans le cas de la première variante reste valable et ne sera pas reprise ici. On pourra donc s'y référer en totalité.

Selon un troisième mode de réalisation de l'invention, on utilise, en tant que polymère mono-, di- ou tribloc, un polymère correspondant à la formule suivante : 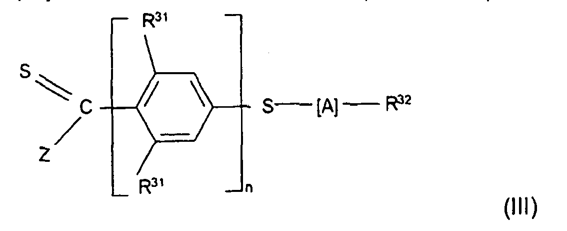 Formule dans laquelle :
- R³² représente :
   - un groupe (i) alkyle, acyle, aryle, alcène ou alcyne éventuellement substitué, ou
   - un cycle (ii) carboné, saturé ou non, éventuellement substitué ou aromatique, ou
   - un hétérocycle (iii), saturé ou non, éventuellement substitué ou aromatique,
      ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, des groupes présentant un caractère hydrophile ou ionique tels que les sels alcalins d'acides carboxyliques; les sels alcalins d'acide sulfonique, les chaînes polyoxyde d'alkylène (POE, POP), les substituants cationiques (sels d'ammonium quaternaires),
      R représentant un groupe alkyle ou aryle,
- Z est choisi parmi :
   - un atome d'hydrogène,
   - un groupe alkyle, acyle, aryle, alcène ou alcyne éventuellement substitué,
   - un cycle carboné saturé ou non, éventuellement substitué ou aromatique,
   - un hétérocycle saturé ou non, éventuellement substitué,
   - des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
   - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
- R³¹, identiques ou différents, sont choisis parmi :
   - un atome d'hydrogène,
   - un groupe alkyle, acyle, aryle, alcène ou alcyne éventuellement substitué,
   - un cycle carboné saturé ou non, éventuellement substitué ou aromatique,
   - un hétérocycle saturé ou non, éventuellement substitué,
   - des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
   - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
   - des groupes SR³²,
- n > 0.

La définition du polymère A décrite dans le cas de la première variante reste valable et ne sera pas reprise ici. On pourra donc s'y référer en totalité.

Selon un quatrième mode de réalisation de l'invention, le polymère mono-, di- ou tribloc mis en oeuvre correspond à la formule suivante :

S=C(Z)-[C≡C]n-S-[A]-R⁴¹ (IV)

Formule dans laquelle :
- R⁴¹ représente :
   - un groupe (i) alkyle, acyle, aryle, alcène ou alcyne éventuellement substitué, ou
   - un cycle (ii) carboné, saturé ou non, éventuellement substitué ou aromatique, ou
   - un hétérocycle (iii), saturé ou non, éventuellement substitué ou aromatique, ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcaroonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
      R représentant un groupe alkyle ou aryle,
- Z, identiques ou différents, sont choisis parmi :
   - un atome d'hydrogène,
   - un groupe alkyle, acyle, aryle, alcène ou alcyne éventuellement substitué,
   - un cycle carboné saturé ou non, éventuellement substitué ou aromatique,
   - un hétérocycle saturé ou non, éventuellement substitué,
   - des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
   - des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
- n>0

La définition du polymère A décrite dans le cas de la première variante reste valable et ne sera pas reprise ici. On pourra donc s'y référer en totalité.

Les polymères (IIa), (IIb), (III) et (IV) peuvent être obtenus en mettant en contact au moins un monomère éthyléniquement insaturé, au moins une source de radicaux libres et au moins un composé de formule (A), (B) ou (C)

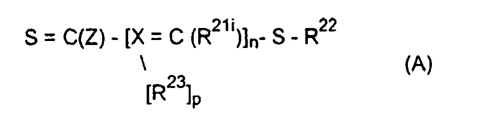

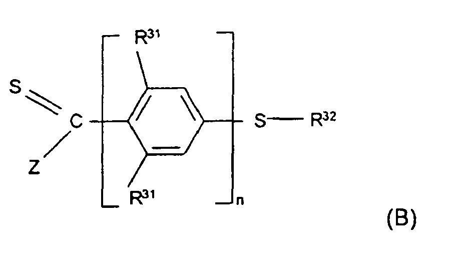

S=C(Z)-[C≡C]ₙ-S-R⁴¹ (C)

Généralement, ces polymères présentent un indice de polydispersité d'au plus 2, de préférence d'au plus 1,5.

L'obtention des polymères di ou triblocs consiste à répéter une ou deux fois la mise en oeuvre du procédé de polymérisation précédemment décrit en utilisant :
- des monomères différents de la mise en oeuvre précédente, et
- à la place du composé de formule (A), (B) ou (C), le polymère à blocs issu de la mise en oeuvre précédente, dit polymère précurseur.

Eventuellement, on peut souhaiter mettre à la surface des latex, des blocs dont on contrôle la polydispersité. Dans ce cas, on peut procéder à un mélange dans des proportions précises de plusieurs solutions de monoblocs; diblocs et/ou triblocs, chacun ayant une masse moléculaire bien définie.

Selon ce procédé de préparation de polymères multiblocs, lorsque l'on souhaite obtenir des polymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Comme pour le procédé de polymérisation de polymère monobloc, ce procédé de polymérisation de polymères à blocs présente l'avantage de conduire à des polymères à blocs présentant un indice de polydispersité faible. Il permet également de contrôler la masse moléculaire des polymères à blocs.

Les polymères blocs correspondant aux formules (II) à (IV) on fait l'objet d'une demande de brevet français numéro FR 99 07097 publiée sous le numéro FR 2794464.

Il est à noter que les principes de préparation des polymères monoblocs, diblocs et triblocs appliqués à ces trois variantes de l'invention, sont extrapolables aux autres variantes de polymères selon l'invention.

Selon un cinquième mode de réalisation de l'invention, le polymère mono-,di-ou tri-bloc mis en oeuvre correspond à la formule suivante :

S = C(OR⁵¹)-S-[A]-R⁵² (V)

formule dans laquelle :
- R⁵¹ représente : 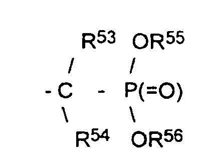 dans laquelle :
   R⁵³, R⁵⁴ , identiques ou non, sont choisis parmi les groupes halogène, = O, =S, -NO₂, -SO₃R, NCO, CN, OR, -SR, -NR₂, -COOR, O₂CR, -CONR₂, -NCOR₂ avec R représentant un atome d'hydrogène ou un radical alkyle, alcényle, alcynyle, cycloacényle, cycloalcynyle, aryle éventuellement condensé à un hétérocycle aromatique ou non, alkylaryle, aralkyle, hétaroaryle ; ces radicaux peuvent éventuellement être substitués par un ou plusieurs groupes identiques ou non, choisis parmi les halogènes, = O, =S, OH, alcoxy, SH, thioalcoxy, NH₂, mono ou di-alkylamino, CN, COOH, ester, amide, CF₃ et/ou éventuellement interrompu par un ou plusieurs atomes choisis parmi 0, S, N, P ; ou parmi un groupe hétérocyclique éventuellement substitué par un ou plusieurs groupes tels que définis précédemment ;
   ou R⁵³ et R⁵⁴ forment ensemble avec l'atome de carbone auquel ils sont attachés, un cycle hydrocarboné ou un hétérocycle ;
- R⁵³ , R⁵⁶ , identiques ou non, représentent un groupe tel que défini ci-dessus pour R ; ou forment ensemble une chaîne hydrocarbonée en C₂-C₄, éventuellement interrompue par un hétéroatome choisi parmi O, S et N ;
- R⁵² possède la même définition que celle donnée pour R⁵³ ;
- A représente un polymère mono-, di- ou tri- bloc.

Selon une variante préférée, les groupes R⁵³ sont choisis parmi -CF₃,

-CF₂CF₂CF₁₃,CN, NO₂.

Avantageusement R⁵⁴ représente un atome d'hydrogène.

Les radicaux R⁵⁵ et R⁵⁶ identiques ou non, représentent un radical alkyle, de préférence en C₁-C₆.

Les polymères de formule (V) peuvent être obtenus en mettant en contact au moins un monomère éthyléniquement insaturé au moins une source de radicaux libres et au moins un composé de formules suivantes :

S=C(OR⁵¹)-S-R⁵² (A')

R'⁵¹ -(O-C(=S)- R⁵²)p (B')

R'⁵¹-(S-C(=S)-O- R⁵¹)p (C')

formules dans lesquelles :
- R⁵¹ , R'⁵¹ , identiques ou non, ont la même définition que celle donnée auparavant pour R⁵¹
- R⁵² , R'⁵² , identiques ou non, ont la même signification que celle donnée auparavant pour R⁵².
- p représente un entier compris entre 2 et 10.

Les composés de formule (A') peuvent notamment être obtenus par réaction d'un composé carbonylé de formule R⁵³-C(=O)-R⁵⁴ avec un phosphite de formule (R⁵⁵ O) HP (=O) (OR⁵⁶). Le composé résultant peut ensuite être mis en contact avec du disulfure de carbone en présence d'un alcoolate, puis avec un halogénure R⁵²-X.

Les composés de formules (B'), (C') peuvent être obtenus en mettant en oeuvre un principe équivalent, mais à partir de composés polyhydroxylés.

Les monomères éthyléniquement insaturés mis en oeuvre pour l'obtention du latex vont maintenant être décrits.

Parmi les monomères convenables, on peut citer tout particulièrement ceux correspondant à la formule suivante :

CXdX'd (= CVd- CV'd)ₜ = CH₂

- Xd, X'd, identiques ou différents, représentent : H, un groupe alkyle ou un halogène,
- Vd, V'd, identiques ou différents, représentent H, un halogène ou un groupe R, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- t vaut 0 ou 1.

Selon un mode de réalisation particulier de l'invention, les monomères mis en oeuvre sont de préférence des monomères hydrophobes.

A titre d'illustration de monomères hydrophobes, on peut citer notamment le styrène ou ses dérivés, le butadiène, le chloroprène, les esters (méth)acryliques, les esters vinyliques et les nitriles vinyliques.

Par esters (méth)acryliques, on désigne les esters de l'acide acrylique et de l'acide méthacrylique avec les alcools en C₁-C₁₂ hydrogénés ou fluorés, de préférence C₁-C₈.

Les nitriles vinyliques incluent plus particulièrement ceux ayant de 3 à 12 atomes de carbone, comme en particulier l'acrylonitrile et le méthacrylonitrile.

Il est à noter que le styrène peut être remplacé en totalité ou en partie par des dérivés tels que l'alphaméthylstyrène ou le vinyltoluène.

Les autres monomères éthyléniquement insaturés, utilisables seuls ou en mélanges, ou copolymérisables avec les monomères ci-dessus sont notamment :
- les esters vinyliques d'acide carboxylique,
- les halogénures de vinyle,
- les amides de la vinylamine,
- les monomères éthyléniques insaturés comportant un groupe amino secondaire, tertiaire ou quaternaire, ou un groupe hétérocyclique contenant de l'azote. II est de même possible d'utiliser des monomères zwitterioniques comme par exemple l'acrylate de sulfopropyl (diméthyl)aminopropyle.

Notons qu'il est possible de mettre en oeuvre des monomères hydrophiles, comme par exemple
- les acides mono- et di- carboxyliques insaturés éthyléniques,
- les mono-alkylesters des acides dicarboxyliques du type cité avec les alcanols ayant de préférence 1 à 4 atomes de carbone et leurs dérivés N-substitués,
- les amides des acides carboxyliques insaturés,
- les monomères éthyléniques comportant un groupe acide sulfonique et ses sels alcalins ou d'ammonium,
- *les amides des acides carboxyliques insaturés, comme l'acrylamide, le méthacrylamide, le N-méthylotactylamide ou le N-méthyloiméthacrylamide, les N-acrylamides.*

Il est à noter que tous les monomères qui ont été cités dans le cadre de la définition du polymère mono-, di- ou tri-bloc peuvent être utilisés pour l'obtention du latex. On pourra donc se référer à cette partie de la description.

Il est à noter que de préférence, on met en oeuvre, en tant que monomère éthyléniquement insaturé, au moins un monomère choisi parmi le styrène ou ses dérivés. le butadiène, le chloroprène, les esters (méth)acryliques, les esters vinyliques et les nitriles vinyliques.

En ce qui concerne la seconde possibilité, celle consistant à mettre en oeuvre un polymère présentant des liaisons éthyléniquement insaturées résiduelles, ce polymère est obtenu par polymérisation radicalaire d'au moins un monomère éthyléniquement insaturé choisi parmi :

CXdX'd (= CVd- CV'd)ₜ = CH₂

- Xd, X'd, identiques ou différents, représentent : H, un groupe alkyle ou un halogène,
- Vd, V'd, identiques ou différents, représentent H, un halogène ou un groupe R, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique.
- t vaut 0 ou 1.

La réaction de polymérisation selon l'invention a lieu en présence d'un amorceur de polymérisation radicalaire. Celui-ci peut être choisi parmi les initiateurs classiquement utilisés en polymérisation radicalaire. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
   - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   - les persulfates, perborate ou perchlorate de métaux alcalins ou d'ammonium en association avec un bisulfite de métal alcalin, tel que le métabisulfite de sodium, et des sucres réducteurs,
   - les persulfate de métal alcalin en association avec un acide arylphosphinique, tel que l'acide benzène phosphonique et autres similaires, et des sucres réducteurs.

La réaction de polymérisation a lieu de manière classique.

Elle est faite en présence d'un tensioactif non ionique ou anionique choisi parmi les mono-, di- ou trialkylphénols alcoxylés, les mono-, di- ou tristyrylphénols alcoxylés, les alcools gras alcoxylés et les sels alcalins ou d'ammonium de sulfates d'alkyles en C₈-C₁₂, les semi esters d'alcool gras alcoxylés sulfatés, les esters sulfonates d'alkyle en C₁₂-C₁₈, etc.

La température de polymérisation est elle aussi classique. A titre d'illustration, la température est comprise entre 50 et 120°C, plus particulièrement entre 70 et 100°C.

Ainsi, un premier mode de réalisation de la polymérisation consiste à effectuer cette dernière en introduisant le monomère éthyléniquement insaturé, l'amorceur, dans une solution de polymère mono, di ou tribloc.

Selon un second mode de réalisation de la polymérisation, on effectue celle-ci en introduisant en parallèle, le monomère éthyléniquement insaturé, l'amorceur, et une solution de polymère mono, di ou tribloc.

Selon un troisième mode de réalisation, la polymérisation est réalisée en introduisant le polymère mono, di ou tribloc, l'amorceur, dans une suspension comprenant le polymère possédant des liaisons éthyléniquement insaturées résiduelles.

Un autre objet de la présente invention est constitué par des poudres redispersables susceptibles d'être obtenues par séchage du latex à chimie de surface modifiée.

Le séchage peut être réalisé de manière connue en soi.

Ainsi, on peut réaliser un séchage à basse température ou, de préférence, par atomisation.

Il peut s'effectuer dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence compris entre 100 et 115°C et la température de sortie est de préférence comprise entre 55 et 65°C.

Selon un mode de réalisation avantageux de la présente invention, le séchage est réalisé en présence d'un adjuvant de séchage.

Les agents dispersants classiques peuvent être employés. Par exemple, on peut citer les polyphénols, les sels de l'acide glutamique, l'alcool polyvinylique, la polyvinylpyrrolidone, les dérivés de cellulose. Il est à noter que l'on peut aussi utiliser un tensioactif non ionique ou anionique.

De manière particulièrement avantageuse, la teneur en adjuvant de séchage est inférieure ou égale à 5 % en poids par rapport au polymère.

Les latex et poudres redispersables qui font l'objet de la présente invention peuvent être mis en oeuvre dans les domaines classiques d'utilisation, comme dans le domaine des matériaux de constructions, des peintures, du papier, des adhésifs sensibles ou non à la pression, entre autres.

Ainsi, la présente invention a de même pour objet des formulations destinées à des applications dans le domaine des matériaux de construction, comprenant le latex à chimie de surface modifiée, ou les poudres redispersables.

Elle concerne aussi des formulations destinées à des applications dans le domaine des peintures, comprenant le latex, ou les poudres redispersables.

Enfin, elle concerne des formulations destinées à des applications dans le domaine des adhésifs et des adhésifs sensibles à la pression, comprenant le latex, ou les poudres redispersables.

Des exemples concrets mais non limitatifs de l'invention vont maintenant être présentés.

### EXEMPLES 1

Ces exemples illustrent la préparation de polymères monoblocs, diblocs selon l'invention

### Exemple 1.1 : Préparation d'un polymère monobloc polyacide acrylique comprenant une extrémité réactive type xanthate (polymère 1.1)

On introduit dans un réacteur muni d'un agitateur magnétique et d'une colonne à reflux, et comprenant 160 g d'acétone, le mélange suivant :
- 16,64 g de méthylisopropyl O-éthylxanthate (ci-après appelé xanthate)
- 63,36 g d'acide acrylique,
- 2 g d'azo bis-isobutyronitrile

Le mélange est ensuite agité et maintenu à reflux à 72°C pendant 17 heures, puis refroidi.

On obtient un gel transparent dont la masse molaire en nombre est de 1050 et l'indice de polydispersité de 1,2 (mesuré par GPC dans l'eau en utilisant le polyéthylèneglycol comme étalon).

### Exemple 1.2 : Préparation du polymère di bloc acide polyacrylique/polyacrylate de butyle comprenant une extrémité réactive type xanthate (polymère 1.2)

Dans un réacteur conique, muni d'un agitateur magnétique et d'une colonne de reflux, on introduit 35,67 g d'une solution aqueuse comprenant 20,16 g du polymère obtenu ci-dessus.

15,5 g d'acétone et 10 g d'eau sont ensuite introduit par le condenseur et le mélange est chauffé sous agitation à 75°C.

On introduit alors 10,5 g d'acrylate de butyle, en 6 heures, en conservant la température à 75°C.

On maintient la température pendant 12 heures après la fin de l'introduction.

Le produit résultant est soluble dans l'eau à pH 6 à température ambiante.

On ajoute ensuite 10,5 g d'acrylate de butyle selon la procédure indiquée auparavant.

Le produit final présente une masse molaire en nombre de 2000 environ, c'est-à-dire p(acide acrylique ; Mn = 1050) - p(acrylate de butyle ; Mn = 1000).

La teneur en matières solides de ce polymère est de 51 %.

### Exemple 1.3 :Préparation du polymère di bloc acide polyacrylamide comprenant une extrémité réactive type xanthate (polymère 1.3)

On introduit dans un réacteur muni d'un agitateur magnétique et d'une colonne à reflux :
- 21 g de xanthate
- 2,1 g d'azo bis-isobutyronitrile
- 100 g de solvant (90% éthanol/10 % eau)

Le mélange est ensuite agité et chauffé à reflux à 75°C.

On ajoute ensuite 200 g d'acrylamide et 200 g de solvant (40% éthanol/60 % eau) en 5 heures.

On maintient ensuite le mélange résultant à 75°C, sous agitation pendant 1 heure, puis on le refroidit.

On obtient un gel transparent dont la masse molaire en nombre est de 1050 et l'indice de polydispersité de 1 (mesuré par GPC dans l'eau en utilisant le polyéthylèneglycol comme étalon).

### EXEMPLES 2

Ces exemples illustrent la préparation de latex comprenant les polymères monoblocs, diblocs selon l'invention, ainsi que la préparation de latex mettant en oeuvre des techniques classiques (latex comparatifs)

### Mode opératoire de préparation des latex

Dans un réacteur muni d'un agitateur magnétique et d'une colonne à reflux, on introduit 45 g d'eau désionisée, 600ppm d'Abex® 2020 (mélange d'alcool gras éthoxylé et d'alcool gras éthoxylé sulfaté, commercialisé par Rhodia - quantité basée sur le monomère) et 1.9 g de monomère ou polymère carboxylique (leur nature, qui varie selon les exemples, sera précisée dans les tableaux qui vont suivre).

Le mélange est neutralisé à un pH compris entre 6-7 avec une solution de soude à 20%.

Le mélange est chauffé à 60°C sous agitation.

Par ailleurs, on prépare une pré-émulsion de monomères de la manière suivante :

On mélange 47,5 g d'eau désionisée, 2,6 g de monomère ou polymère carboxylique, 79,7 g de monomères de coeur (dont la proportion relative, qui varie selon les exemples, sera indiquée dans les tableaux qui vont suivre).

La pré-émulsion est neutralisée à un pH compris entre 6 et 7 avec une solution à 20% de soude.

On ajoute rapidement au mélange à 60°C, 20 g de la pré-émulsion précitée, puis 0,17 g de persulfate de sodium dissous dans 2 g d'eau désionisée.

Après l'addition de la pré-émulsion, le mélange est chauffé à 80-85°C pendant 45 minutes. Une fois la température stabilisée, on ajoute le restant de la pré-émulsion en 3 heures. Après 1 heure et demie, 50 g d'eau sont ajoutés pendant 1 heure et demie.

Le latex résultant est maintenu à 85°C pendant 30 minutes, puis on ajoute 1000 ppm de tertiobutylperbenzoate et 1000 ppm de métabisulfite de sodium.

Le latex est ensuite strippé.

Le latex obtenu présente une teneur en matières solides de 34,7%.

### Exemple 2.1 : Polymérisation en émulsion de styrène et d'acrylate de butyle, en présence du polymère 1.1 (latex 2.1)

### Monomères de coeur :

| | |
|---|---|
| Acrylate de butyle : | 60,1 % |
| Styrène : | 36,9 % |

### Polymère carboxylique :

| | |
|---|---|
| Polymère 1.1 : | 3 % |

### Exemple 2.2 : Polymérisation en émulsion de styrène et d'acrylate de butyle, en présence du polymère 1.2 (latex 2.2)

### Monomères de coeur :

| | |
|---|---|
| Acrylate de butyle : | 62,2 % |
| Styrène : | 36,5 % |

### Polymère carboxylique :

| | |
|---|---|
| Polymère 1.2 : | 1,3% |

Le diamètre des particules est en moyenne de 60 nm.

Il est à noter que le latex flocule à un pH de 3. Ceci indique que le latex porte des greffons d'acide polyacrylique-polyacrylate de butyle, concentrés à la surface des particules.

### Exemple 2.3 :Polymérisation en émulsion de styrène et d'acrylate de butyle, en présence du polymère 1.3 (latex 2.3)

### Monomères de coeur :

| | |
|---|---|
| Acrylate de butyle : | 61 % |
| Styrène : | 36 % |

### Polymère carboxylique :

| | |
|---|---|
| Polymère 1.3 : | 3 % |

### Exemple 2.4 :Polymérisation en émulsion de styrène et d'acrylate de butyle, en présence du polymère 1.1 (latex 2.4)

### Monomères de coeur :

| | |
|---|---|
| Acrylate de butyle : | 60 % |
| Styrène : | 36,5 % |

### Monomère et polymère carboxyliques :

| | |
|---|---|
| Acide itaconique : | 1 % |
| Polymère 1.1 : | 2,5 % |

### Exemple 2.5 :Polymérisation radicalaire en émulsion classique (latex 2.1 comparatif)

### Monomères de coeur :

| | |
|---|---|
| Acrylate de butyle : | 61 % |
| Styrène : | 36 % |

### Monomère carboxylique :

| | |
|---|---|
| Acide acrylique : | 3 % |

### Exemple 2.6 :Polymérisation radicalaire en émulsion classique (latex 2.3 comparatif)

### Monomères de coeur :

| | |
|---|---|
| Acrylate de butyle : | 61% |
| Styrène : | 36 % |

### Monomère carboxylique :

| | |
|---|---|
| Acrylamide : | 3 % |

### Exemple 2.7 :Polymérisation en émulsion de styrène et d'acrylate de butyle, en présence du polymère 1.1 (latex 2.4 comparatif)

### Monomères de coeur :

| | |
|---|---|
| Acrylate de butyle : | 60 % |
| Styrène : | 36,5 % |

### Monomères carboxyliques :

| | |
|---|---|
| Acide itaconique : | 1 % |
| Acide acrylique: | 2,5 % |

### EXEMPLES 3

Ces exemples ont pour objet de montrer les propriétés de redispersion d'un film de latex déposé sur du verre.

### Exemple 3.1 : Utilisation de sel d'acide glutamique :

### Latex testés :

Latex 2.1
Latex 2.1 comparatif

### Méthode :

Pour chacun de ces deux latex, on prépare deux lots.

Le premier est séché sans ajout d'un adjuvant de séchage, le second en présence de 5 % en poids par rapport au polymère de latex d'un sel de sodium d'acide glutamique.

On dépose un film de 100 µm d'épaisseur avec chacune de ces compositions et l'on sèche le tout pendant 15 mns à 120°C.

Les résultats sont rassemblés dans le tableau ci-dessous

| **Latex** | **Sans** | **Avec** |
|---|---|---|
| **2.1** | 0 | 9 |
| **2.1 Comparatif** | 0 | 0 |

Les notes vont de 0 (pas de redispersion) à 10 (redispersion totale), selon un test qui consiste à mettre une faible quantité d'eau à la surface du film et à juger la qualité de la dispersion après quelques secondes.

On voit sans conteste l'influence des latex sur les propriétés de redispersion du film séché. Notons de plus que les teneurs en adjuvant de séchage sont plus faibles que celles généralement employées dans l'art antérieur (de l'ordre de 15 % en général, pour des latex de taille équivalente, soit environ 100 à 150 nm).

### Exemple 3.2 : Utilisation de tanin

### Latex testés :

Latex 3.1
Latex 3.1 comparatif

### Méthode :

On procède comme pour l'exemple 3.1, à l'exception du fait que l'on remplace les 5 % de sel d'acide glutamique, par 5 % en poids par rapport au polymère de latex, d'Albatan GNL (tanin commercialisé par Rhodia).

Les résultats sont rassemblés dans le tableau ci-dessous

| **Latex** | **Sans** | **Avec** |
|---|---|---|
| **3.1** | 6 | 10 |
| **3.1 comparatif** | 0 | 10 |

Les notes vont de 0 (pas de redispersion) à 10 (redispersion totale).

L'avantage de mettre en oeuvre des latex conformes à l'invention est encore une fois évidente, compte tenu des modifications remarquables des propriétés de redispersion.

### EXEMPLE 4

Cet exemple a pour objet de montrer la résistance à l'abrasion humide d'un film de latex obtenu selon l'invention, et d'un latex obtenu en mettant en jeu une polymérisation radicalaire classique, ces deux films comprenant du carbonate de calcium.

### Latex testés :

Latex 2.1
Latex 2.2
Latex comparatif 2.1

### Préparation des compositions testées.

Les latex sont mélangés à du Carbital 90 à raison de 10 parties pour le latex et de 100 parties pour le Carbital 90.

Le Carbital 90 est une suspension aqueuse de carbonate de calcium.

L'extrait sec des compositions est ajusté à 72,5 % et le pH de 8,5.

Les compositions sont laissées au repos 24 heures avant d'être appliquées.

### Test d'abrasion en humide

### (1) Fabrication des films

Les mélanges sont déposés sur support (dit « Lenetta ») à l'aide d'un tire-film ayant un entre-fer de 275 µm d'épaisseur.

Le séchage se fait suivant la procédure suivante (procédure accélérée) :
- 24 heures en salle conditionnée
- 24 heures à 55°C
- 24 heures en salle conditionnée

### (2) Test d'abrasion humide

Les compositions séchées sont usées en présence d'un mélange d'eau et de tensioactif, à l'aide d'une brosse qui effectue automatiquement des mouvements de va-et-vient.

On repère le nombre de cycles au delà desquels la peinture, usée, fait apparaître le support.

Ce test respecte la norme MO 223VU013.

### (3) Résultats

| **Composition** | **Nombre de cycles** |
|---|---|
| **2.1** | > 5000 |
| **2.3** | 4300 |
| **2.1 comparatif** | 545 |

### EXEMPLE 5

Cet exemple a pour objet d'évaluer la stabilité au stockage de compositions comprenant un latex et du carbonate de calcium

### Latex testés :

Latex 2.4
Latex 2.4 comparatif

### Préparation des compositions testées.

Les latex sont mélangés à du Carbital 90 à raison de 10 parties pour le latex et de 100 parties pour le Carbital 90.

Le Carbital 90 est une suspension aqueuse de carbonate de calcium.

L'extrait sec des compositions est ajusté à 72,5 % et le pH de 8,5.

Les compositions sont laissées au repos 24 heures avant d'être appliquées.

### Mesure de la viscosité :

On mesure les valeurs de la viscosité (à 32 seconde⁻¹) avant et après un stockage, pendant 3 jours à 55°C. (rhéomètre Carri-Med CSL² 100 TA instruments. Il s'agit des viscosités d'écoulement sous cisaillement en géométrie cône plan)

Les résultats sont rassemblés dans le tableau ci-dessous :

| **Composition** | **Viscosité (mPa.s)** | |
|---|---|---|
| | **Avant** | **Après** |
| **2.4** | 494 | 545 |
| **2.4 comparatif** | 290 | 2876 |

On constate bien que la composition comprenant le latex selon l'invention est plus stable que celui obtenu en mettant en oeuvre une polymérisation radicalaire classique.

## Revendications

1. Latex à chimie de surface modifiée, susceptible d'être obtenu en effectuant une polymérisation radicalaire en émulsion, en présence :
- d'au moins un monomère éthyléniquement insaturé ou au moins un polymère possédant des liaisons éthyléniquement insaturées résiduelles,
- d'au moins un initiateur de polymérisation radicalaire,
- d'au moins un polymère monobloc, dibloc ou tribloc, soluble et/ou dispersable dans l'eau, comprenant à son extrémité un groupement actif, susceptible de former un radical, et choisi parmi les thioethers-thiones, dithiocarbamates et xanthates.

2. Latex selon la revendication précédente, **caractérisé en ce que** l'on effectue la polymérisation radicalaire en présence d'un polymère correspondant à la formule suivante :
(R¹¹)x-Z¹¹-C(=S)-Z¹²-[A]-R¹² (I)
formule dans laquelle :
- Z¹¹ représente C, N, ou O,
- Z¹² représente S ,
- R¹¹ et R1², identiques ou différents, représentent :
un groupe (i) alkyle, acyle, aryle, alcène ou alcyne éventuellement substitué, ou
. un cycle (ii) carboné, saturé ou non, éventuellement substitué ou aromatique, ou
. un hétérocycle (iii), saturé ou non, éventuellement substitué,
ces groupes et cycles (i), (ii) et (iii) pouvant être substitués par des groupes phényles substitués, dés groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, les groupes présentant un caractère hydrophile ou ionique choisis parmi les sels alcalins d'acides carboxyliques, les sels alcalins d'acide sulfonique, les chaînes polyoxyde d'alkylène (POE, POP), et les substituants cationiques (sels d'ammonium quaternaires),
R représentant un groupe alkyle ou aryle,
- x correspond à la valence de Z¹¹ ou bien
- x vaut 0 et dans ce cas, Z¹¹ représente un radical phényle, alcène, ou alcyne, éventuellement substitué par un groupe alkyle ; acyle ; aryle ; alcène ou alcyne éventuellement substitué ; un cycle carboné éventuellement substitué, saturé, insaturé, ou aromatique ; un hétérocycle éventuellement substitué, saturé ou insaturé ; des groupes alkoxycarbonyl ou aryloxycarbonyl (-COOR) ; carboxy (-COOH) ; acyloxy (-O₂CR) ; carbamoyle (-CONR₂) ; cyano (-CN) ; alkylcarbonyle ; alkylarylcarbonyle ; arylcarbonyle ; arylalkylcarbonyle ; phtalimido ; maleïmido ; succinimido ; amidino ; guanidimo ; hydroxy (-OH) ; amino (-NR₂) ; halogène ; allyle ; époxy ; alkoxy (-OR), S-alkyle ; S-aryle ; des groupes présentant un caractère hydrophile ou ionique choisis parmi les sels alcalins d'acides carboxyliques, les sels alcalins d'acide sulfonique, les chaînes polyoxyde d'alkylène (POE, POP), les substituants cationiques (sels d'ammonium quaternaires) ;
- A représente un polymère mono, di ou tribloc.

3. Latex selon la revendication 1 **caractérisé en ce que** l'on effectue la polymérisation en présence d'un polymère correspondant aux formules suivantes : 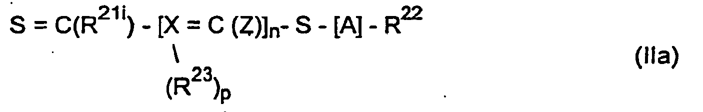 et/ou : 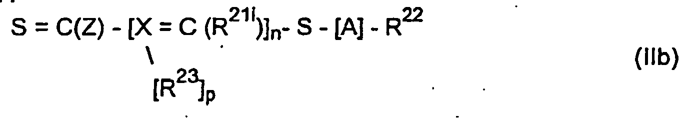 formules dans lesquelles :
- X représente un atome choisi parmi C,
- R²² représente :
un groupe (i) alkyle, acyle, aryle, alcène ou alcyne éventuellement substitué, ou
• un cycle (ii) carboné, saturé ou non, éventuellement substitué ou aromatique, ou
• un hétérocycle (iii), saturé ou non, éventuellement substitué ou aromatique,
ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, des groupes présentant un caractère hydrophile ou ionique choisi parmi les sels alcalins d'acides carboxyliques, les sels alcalins d'acide sulfonique, les chaînes polyoxyde d'alkylène (POE, POP), les substituants cationiques (sels d'ammonium quaternaires),
R représentant un groupe alkyle ou aryle,
- Z, R²¹ⁱ, R²³, identiques ou différents, sont choisis parmi :
• un atome d'hydrogène,
• un groupe alkyle, acyle, aryle, alcène ou alcyne éventuellement substitué,
• un cycle carboné saturé ou non, éventuellement substitué ou aromatique,
• un hétérocycle saturé ou non, éventuellement substitué,
• des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
• des groupes présentant un caractère hydrophile ou ionique choisis parmi les sels alcalins d'acides carboxyliques, les sels alcalins d'acide sulfonique, les chaînes polyoxyde d'alkylène (POE, POP), les substituants cationiques (sels d'ammonium quaternaires),
- n > 0,
- i varie de 1 à n,
- p égale 0, 1 ou 2 selon la valence de X
de plus,
- si X = C, alors Z n'est pas un groupe S-alkyle ou S-aryle,
- le groupe R¹ⁱ, avec i = n, n'est pas un groupe S-alkyle ou S-aryle,
- A représente un polymère mono, di ou tribloc.

4. Latex selon la revendication 1 **caractérisé en ce que** l'on effectue la polymérisation en présence d'un polymère correspondant à la formule suivante : 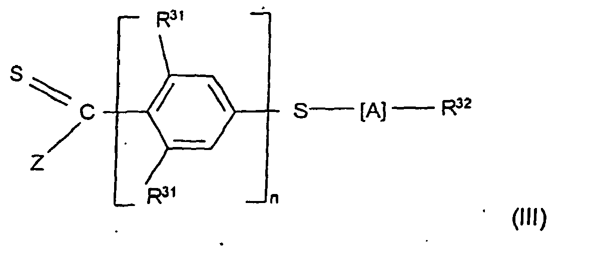 Formule dans laquelle :
- R³² représente :
• un groupe (i) alkyle, acyle, aryle, alcène ou alcyne éventuellement substitué, ou
• un cycle (ii) carboné, saturé ou non, éventuellement substitué ou aromatique, ou
• un hétérocycle (iii), saturé ou non, éventuellement substitué ou aromatique, ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, des groupes présentant un caractère hydrophile ou ionique choisis parmi les sels alcalins d'acides carboxyliques, les sels alcalins d'acide sulfonique, les chaînes polyoxyde d'alkylène (POE, POP), les substituants cationiques (sels d'ammonium quaternaires),
R représentant un groupe alkyle ou aryle,
- Z est choisi parmi :
• un atome d'hydrogène,
• un groupe alkyle, acyle, aryle, alcène ou alcyne éventuellement substitué,
• un cycle carboné saturé ou non, éventuellement substitué ou aromatique,
• un hétérocycle saturé ou non, éventuellement substitué,
• des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
• des groupes présentant un caractère hydrophile ou ionique choisis parmi les sels alcalins d'acides carboxyliques, les sels alcalins d'acide sulfonique, les chaînes polyoxyde d'alkylène (POE, POP), les substituants cationiques (sels d'ammonium quaternaires),
- R³¹, identiques ou différents, sont choisis parmi :
• un atome d'hydrogène,
• un groupe alkyle, acyle, aryle, alcène ou alcyne éventuellement substitué,
• un cycle carboné saturé ou non, éventuellement substitué ou aromatique,
• un hétérocycle saturé ou non, éventuellement substitué,
• des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
• des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires).
• des groupes SR³²,
- n > 0,
- A représente un polymère mono, di ou tribloc.

5. Latex selon la revendication 1, **caractérisé en ce que** l'on effectue la polymérisation en présence d'un polymère correspondant à la formule suivante :
S=C(Z)-[C≡C]ₙ-S-[A]-R⁴¹ (IV)
Formule dans laquelle :
- R⁴¹ représente :
• un groupe (i) alkyle, acyle, aryle, alcène ou alcyne éventuellement substitué, ou
• un cycle (ii) carboné, saturé ou non, éventuellement substitué ou aromatique, ou
• un hétérocycle (iii), saturé ou non, éventuellement substitué ou aromatique, ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, des groupes présentant un caractère hydrophile ou ionique choisis parmi les sels alcalins d'acides carboxyliques, les sels alcalins d'acide sulfonique, les chaînes polyoxyde d'alkylène (POE, POP), les substituants cationiques (sels d'ammonium quaternaires),
R représentant un groupe alkyle ou aryle,
- Z, identiques ou différents, sont choisis parmi :
• un atome d'hydrogène,
• un groupe alkyle, acyle, aryle, alcène ou alcyne éventuellement substitué,
• un cycle carboné saturé ou non, éventuellement substitué ou aromatique,
• un hétérocycle saturé ou non, éventuellement substitué,
• des groupes alkoxycarbonyl ou aryloxycarbonyl (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, allyle, époxy, alkoxy (-OR), S-alkyle, S-aryle, organosilyle, R représentant un groupe alkyle ou aryle,
• des groupes présentant un caractère hydrophile ou ionique choisis parmi les sels alcalins d'acides carboxyliques, les sels alcalins d'acide sutfonique, les chaînes polyoxyde d'alkylène (POE, POP), les substituants cationiques (sels d'ammonium quaternaires),
- n>0
- A représente un polymère mono, di ou tribloc.

6. Latex selon la revendication 1, **caractérisé en ce que** l'on effectue la polymérisation en présence d'un polymère correspondant à la formule suivante :
S = C(OR⁵¹)-S-[A]-R⁵² (V)
formule dans laquelle:
- R⁵¹ représente : 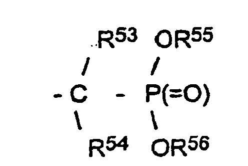
dans laquelle :
R⁵³, R⁵⁴ , identiques ou non, sont choisis parmi les groupes halogène, = O, =S, -NO₂, -SO₃R, NCO, CN, OR, -SR, -NR₂, -COOR, O₂CR, -CONR₂, -NCOR₂ avec R représentant un atome d'hydrogène ou un radical alkyle, alcényle, alcynyle, cycloacényle, cycloalcynyle, aryle éventuellement condensé à un hétérocycle aromatique ou non, alkylaryle, aralkyle, hétaroaryle ; ces radicaux peuvent éventuellement être substitués par un ou plusieurs groupes identiques ou non, choisis parmi les halogènes, = O, =S, OH, alcoxy, SH, thioalcoxy, NH₂, mono ou di-alkylamino, CN, COOH, ester, amide, CF₃ et/ou éventuellement interrompu par un ou plusieurs atomes choisis parmi O, S, N, P ; ou parmi un groupe hétérocyclique éventuellement substitué par un ou plusieurs groupes tels que définis précédemment ;
ou R⁵³ et R⁵⁴ forment ensemble avec l'atome de carbone auquel ils sont attachés, un cycle hydrocarboné ou un hétérocycle ;
- R⁵³ , R⁵⁶ , identiques ou non, représentent un groupe tel que défini ci-dessus pour R ; ou forment ensemble une chaîne hydrocarbonée en C₂-C₄, éventuellement interrompue par un hétéroatome choisi parmi O, S et N ;
- R⁵² possède la même définition que celle donnée pour R⁵³ ;
- A représente un polymère mono-, di- ou tri- bloc.

7. Latex selon rune quelconque des revendications précédentes, **caractérisé en ce que** le polymère A correspond à au moins l'une des formules suivantes : 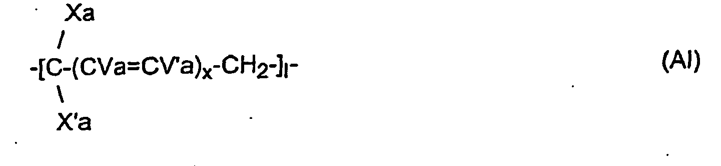 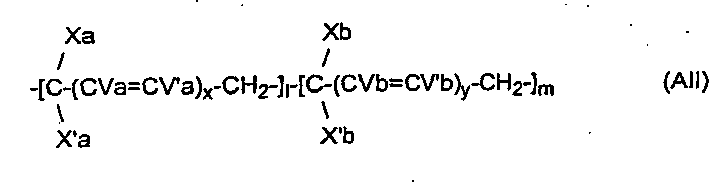 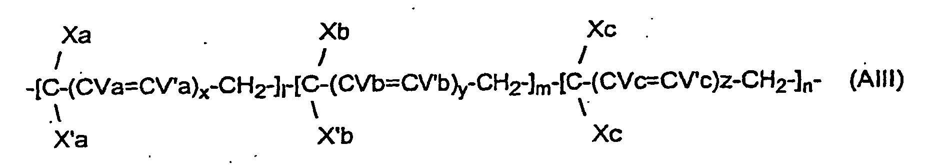 formules dans lesquelles :
- Va, V'a, Vb, V'b, Vc, V'c, identiques ou différents, représentent : H, un groupe alkyle ou un halogène,
- Xa, X'a, Xb, X'b, Xc, X'c, identiques ou différents, représentent H, un halogène ou un groupe R, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques ou non, sont choisiS parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- l, m, n, identiques ou différents, supérieurs ou égaux à 1,
- x, y, z, identiques ou différents, sont égaux à 0 ou 1.

8. Latex selon l'une quelconque des revendications précédentes, **caractérisé en ce que** le polymère A présente une masse molaire en nombre inférieure à 20000 de préférence inférieure à 10000.

9. Latex selon l'une quelconque des revendications précédentes, **caractérisé en ce que** le ou les monomères éthyléniquement insaturés sont choisis parmi :
CXdX'd (= CVd- CV'd)ₜ = CH₂
- Xd, X'd, identiques ou différents, représentent : H, un groupe alkyle ou un halogène,
- Vd, V'd, identiques ou différents, représentent H, un halogène ou un groupe R, OR, OCOR, NHCOH, OH, NH₂, NHR, N(R)₂, (R)₂N⁺O⁻, NHCOR, CO₂H, CO₂R, CN, CONH₂, CONHR ou CONR₂, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique.
- t vaut 0 ou 1.

10. Latex selon la précédente, **caractérisé en ce que** le ou les monomères éthyléniquement insaturés sont choisis parmi : le styrène ou ses dérivés, le butadiène, le chloroprène, les esters (méth)acryliques et les nitriles vinyliques.

11. Latex selon l'une quelconque des revendications précédentes, **caractérisé en ce que** le polymère possédant des liaisons éthyléniquement insaturées résiduelles est obtenu par polymérisation radicalaire d'au moins un monomère éthyléniquement insaturé choisi parmi :
CXdX'd (= CVd- CV'd)ₜ = CH₂
- Xd, X'd, identiques ou différents, représentent : H, un groupe alkyle ou un halogène,
- Vd, V'd, identiques ou différents, représentent H, un halogène ou un groupe R, OR, OCOR, NHCOH, OH, NH₂, NHR, N(R)₂, (R)₂N⁺O⁻, NHCOR, . CO₂H, CO₂R, CN, CONH₂, CONHR ou CONR₂, dans lesquels R, identiques ou non, sont choisis parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique.
- t vaut 0 ou 1.

12. Latex selon l'une quelconque des revendications précédentes, **caractérisé en ce que** l'on effectue la polymérisation en introduisant le monomère éthyléniquement insaturé, l'amorceur, dans une solution de polymère mono, di ou tribloc.

13. Latex selon l'une quelconque des revendications 1 à 12, **caractérisé en ce que** l'on effectue la polymérisation en introduisant en parallèle, le monomère éthyléniquement insaturé, l'amorceur, et une solution de polymère mono, di ou tribloc.

14. Latex selon l'une quelconque des revendications 1 à 12, **caractérisé en ce que** l'on effectue la polymérisation en introduisant le polymère mono, di ou tribloc, l'amorceur, dans une suspension comprenant le polymère possédant des liaisons éthyléniquement insaturées résiduelles.

15. Poudres redispersables susceptibles d'être obtenues en effectuant un séchage du latex à chimie de surface modifié selon l'une quelconque des revendications 1 à 14.

16. Poudres selon la revendication précédente, **caractérisé en ce que** le séchage est réalisé en présence d'un adjuvant de séchage.

17. Formulations destinées à des applications dans le domaine des matériaux de construction, comprenant le latex à chimie de surface modifiée selon l'une quelconque des revendications 1 à 14, ou d'une poudre redispersable obtenue selon l'une quelconque des revendications 15 ou 16.

18. Formulations destinées à des applications dans le domaine des peintures, comprenant le latex à chimie de surface modifiée selon l'une quelconque des revendications 1 à 13, ou d'une poudre redispersable obtenue selon l'une quelconque des revendications 15 ou 16.

19. Formulations destinées à des applications dans le domaine des adhésifs et des adhésifs sensibles à la pression, comprenant le latex à chimie de surface modifiée selon l'une quelconque des revendications 1 à 14, ou d'une poudre redispersable obtenue selon l'une quelconque des revendications 15 ou 16.

20. Formulations destinées à des applications dans le domaine du papier, comprenant le latex à chimie de surface modifiée selon l'une quelconque des revendications 1 à 14, ou d'une poudre redispersable obtenue selon l'une quelconque des revendications 14 ou 16.

21. Utilisation d'un latex à chimie de surface modifiée selon l'une quelconque des revendications 1 à 14, ou d'une poudre redispersable obtenue selon l'une quelconque des revendications 15 ou 16, dans des formulations destinées à des applications dans le domaine des matériaux de construction.

22. Utilisation d'un latex à chimie de surface modifiée selon l'une quelconque des revendications 1 à 14, ou d'une poudre redispersable obtenue selon l'une quelconque des revendications 15 ou 16, dans des formulations destinées à des applications dans le domaine des peintures.

23. Utilisation d'un latex à chimie de surface modifiée selon l'une quelconque des revendications 1 à 14, ou d'une poudre redispersable obtenue selon l'une quelconque des revendications 15 ou 16, dans des formulations destinées à des applications dans le domaine des adhésifs et des adhésifs sensibles à la pression.

24. Utilisation d'un latex à chimie de surface modifiée selon l'une quelconque des revendications 1 à 14, ou d'une poudre redispersable obtenue selon l'une quelconque des revendications 15 ou 16, dans des formulations destinées à des applications dans le domaine des papiers.

## Claims

1. Latex with modified surface chemistry, which may be obtained by carrying out a free-radical emulsion polymerization in the presence:
- of at least one ethylenically unsaturated monomer or at least one polymer containing residual ethylenically unsaturated bonds,
- of at least one free-radical polymerization initiator,
- of at least one water-soluble and/or water-dispersible monoblock, diblock or triblock polymer comprising at its end an active group capable of forming a radical, chosen from thioether-thiones, dithiocarbamates and xanthates.

2. Latex according to the preceding claim, **characterized in that** the free-radical polymerization is carried out in the presence of a polymer corresponding to the following formula:
(R¹¹)x-Z¹¹-C(=S)-Z¹²-[A]-R¹² (I)
in which formula:
- Z¹¹ represents C, N or O,
- Z¹² represents S,
- R¹¹ and R¹², which may be identical or different, represent:
. an optionally substituted alkyl, acyl, aryl, alkene or alkyne group (i), or
. a saturated or unsaturated, optionally substituted or aromatic carbon-based ring (ii), or
. a saturated or unsaturated, optionally substituted heterocycle (iii),
these groups and rings (i), (ii) and (iii) possibly being substituted with substituted phenyl groups, substituted aromatic groups or groups: alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl, groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
R respresenting an alkyl or aryl group,
- x corresponds to the valency of Z¹¹, or alternatively
- x is 0, in which case Z¹¹ represents a phenyl, alkene or alkyne radical, optionally substituted with an optionally substituted alkyl; acyl; aryl; alkene or alkyne group; an optionally substituted, saturated, unsaturated, or aromatic, carbon-based ring; an optionally substituted, saturated or unsaturated heterocycle; alkoxycarbonyl or aryloxycarbonyl (-COOR); carboxyl (-COOH); acyloxy (-O₂CR); carbamoyl (-CONR₂); cyano (-CN); alkylcarbonyl; alkylarylcarbonyl; arylcarbonyl; arylalkylcarbonyl; phthalimido; maleimido; succinimido; amidino; guanidimo; hydroxyl (-OH); amino (-NR₂); halogen; allyl; epoxy; alkoxy (-OR), S-alkyl; S-aryl groups; groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts);
- A represents a monoblock, diblock or triblock polymer.

3. Latex according to Claim 1, **characterized in that** the polymerization is carried out in the presence of a polymer corresponding to the following formulae: 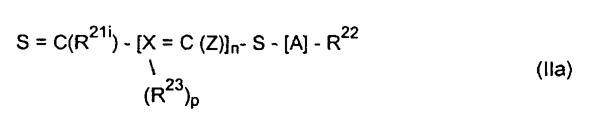 and/or: 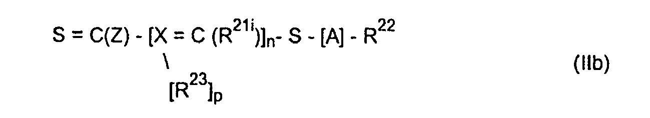 in which formulae:
- X represents an atom chosen from C,
- R²² represents:
an optionally substituted alkyl, acyl, aryl, alkene or alkyne group (i), or
• a saturated or unsaturated, optionally substituted or aromatic carbon-based ring (ii), or
• a saturated or unsaturated, optionally substituted or aromatic heterocycle (iii),
these groups and rings (i), (ii) and (iii) possibly being substituted with substituted phenyl groups, substituted aromatic groups or groups: alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl, organosilyl, groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
R representing an alkyl or aryl group,
- Z, R²¹ⁱ and R²³, which may be identical or different, are chosen from:
• a hydrogen atom,
• an optionally substituted alkyl, acyl, aryl, alkene or alkyne group,
• a saturated or unsaturated, optionally substituted or aromatic carbon-based ring,
• a saturated or unsaturated, optionally substituted heterocycle,
• alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl and organosilyl groups, R representing an alkyl or aryl group,
• groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
- n > 0,
- i ranges from 1 to n,
- p is equal to 0, 1 or 2 depending on the valency of X,
and also
- if X = C, then Z is not an S-alkyl or S-aryl group,
- the group R¹ⁱ, where i = n, is not an S-alkyl or S-aryl group,
- A represents a monoblock, diblock or triblock polymer.

4. Latex according to Claim 1, **characterized in that** the polymerization is carried out in the presence of a polymer corresponding to the following formula: 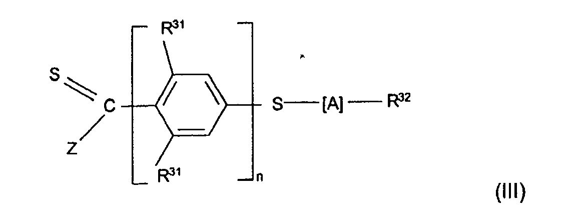 in which formula:
- R³² represents:
• an optionally substituted alkyl, acyl, aryl, alkene or alkyne group (i), or
• a saturated or unsaturated, optionally substituted or aromatic carbon-based ring (ii), or
• a saturated or unsaturated, optionally substituted or aromatic heterocycle (iii),
these groups and rings (i), (ii) and (iii) possibly being substituted with substituted phenyl groups, substituted aromatic groups or groups: alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl, organosilyl, groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
R representing an alkyl or aryl group,
- Z is chosen from:
• a hydrogen atom,
• an optionally substituted alkyl, acyl, aryl, alkene or alkyne group,
• a saturated or unsaturated, optionally substituted or aromatic carbon-based ring,
• a saturated or unsaturated, optionally substituted heterocycle,
• alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl and organosilyl groups, R representing an alkyl or aryl group,
• groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
- R³¹, which may be identical or different, are chosen from :
• a hydrogen atom,
• an optionally substituted alkyl, acyl, aryl, alkene or alkyne group,
• a saturated or unsaturated, optionally substituted or aromatic carbon-based ring,
• a saturated or unsaturated, optionally substituted heterocycle,
• alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl and organosilyl groups, R representing an alkyl or aryl group,
• groups of hydrophilic or ionic nature such as the alkali metal salts of carboxylic acids, the alkali metal salts of sulphonic acid, polyalkylene oxide (PEO or PPO) chains and cationic substituents (quaternary ammonium salts),
• groups SR³²,
- n > 0,
- A represents a monoblock, diblock or triblock polymer.

5. Latex according to Claim 1, **characterized in that** the polymerization is carried out in the presence of a polymer corresponding to the following formula:
S=C(Z)-[C≡C]ₙ-S-[A]-R⁴¹ (IV)
in which formula:
- R⁴¹ represents:
• an optionally substituted alkyl, acyl, aryl, alkene or alkyne group (i), or
• a saturated or unsaturated, optionally substituted or aromatic carbon-based ring (ii), or
• a saturated or unsaturated, optionally substituted or aromatic heterocycle (iii),
these groups and rings (i), (ii) and (iii) possibly being substituted with substituted phenyl groups, substituted aromatic groups or groups: alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl, organosilyl, groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
R representing an alkyl or aryl group,
- Z, which may be identical or different, are chosen from:
• a hydrogen atom,
• an optionally substituted alkyl, acyl, aryl, alkene or alkyne group,
• a saturated or unsaturated, optionally substituted or aromatic carbon-based ring,
• a saturated or unsaturated, optionally substituted heterocycle,
• alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl and organosilyl groups, R representing an alkyl or aryl group,
• groups of hydrophilic or ionic nature chosen from the alkali metal salts of carboxylic acids, the alkali metal salts of sulphonic acid, polyalkylene oxide (PEO or PPO) chains and cationic substituents (quaternary ammonium salts),
- n > 0,
- A represents a monoblock, diblock or triblock polymer.

6. Latex according to Claim 1, **characterized in that** the polymerization is carried out in the presence of a polymer corresponding to the following formula:
S=C(OR⁵¹)-S-[A]-R⁵² (V)
in which formula:
- R⁵¹ represents: 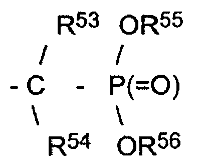
in which:
R⁵³ and R⁵⁴, which may be identical or different, are chosen from halogen, =O, =S, -NO₂, -SO₃R, NCO, CN, OR, -SR, -NR₂, -COOR, O₂CR, -CONR₂ and -NCOR₂ groups with R representing a hydrogen atom or an alkyl radical, alkenyl radical, alkynyl radical, cycloalkenyl radical, cycloalkynyl radical, aryl radical optionally fused to an aromatic or non-aromatic heterocycle, alkylaryl radical, aralkyl radical or heteroaryl radical; these radicals may optionally be substituted with one or more groups, that may be identical or different, chosen from halogens, =O, =S, OH, alkoxy, SH, thioalkoxy, NH₂, monoalkylamino, dialkylamino, CN, COOH, ester, amide and CF₃ and/or optionally interrupted with one or more atoms chosen from O, S, N and P; or from a heterocyclic group optionally substituted with one or more groups as defined above;
or R⁵³ and R⁵⁴ form, together with the carbon atom to which they are attached, a hydrocarbon-based ring or a heterocycle;
- R⁵³ and R⁵⁶, which may be identical or different, represent a group as defined above for R; or together form a C₂-C₄ hydrocarbon-based chain, optionally interrupted with a heteroatom chosen from 0, S and N;
- R⁵² has the same definition as that given for R⁵³;
- A represents a monoblock, diblock or triblock polymer.

7. Latex according to any one of the preceding claims, **characterized in that** polymer A corresponds to at least one of the following formulae: 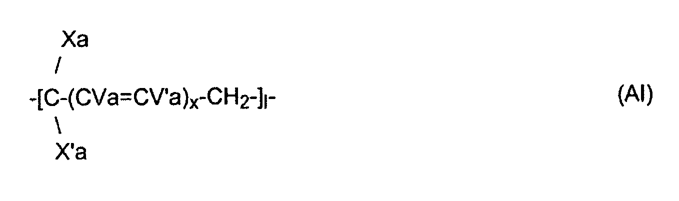 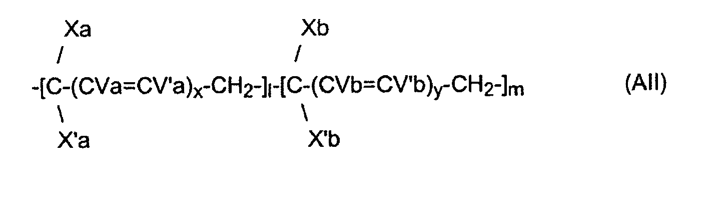 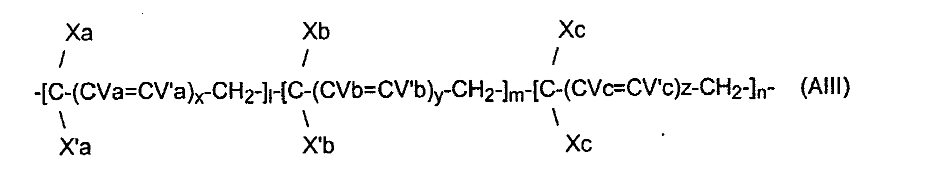 in which formulae:
- Va, V'a, Vb, V'b, Vc and V'c, which may be identical or different, represent: H, an alkyl group or a halogen,
- Xa, X'a, Xb, X'b, Xc and X'c, which may be identical or different, represent H, a halogen or a group R, OR, OCOR, NHCOH, OH, NH₂, NHR, N(R)₂, (R)₂N⁺O⁻, NHCOR, CO₂H, CO₂R, CN, CONH₂, CONHR or CONR₂, in which R, which may be identical or different, are chosen from alkyl, aryl, aralkyl, alkaryl, alkene and organosilyl groups, optionally perfluorinated and optionally substituted with one or more carboxyl, epoxy, hydroxyl, alkoxy, amino, halogen or sulphonic groups,
- 1, m and n, which may be identical or different, are greater than or equal to 1,
- x, y and z, which may be identical or different, are equal to 0 or 1.

8. Latex according to any one of the preceding claims, **characterized in that** the polymer A has a number-average molar mass of less than 20 000 and preferably less than 10 000.

9. Latex according to any one of the preceding claims, **characterized in that** the ethylenically unsaturated monomer(s) is (are) chosen from:
CXdX'd (=CVd-CV'd)ₜ=CH₂
- Xd and X'd, which may be identical or different, represent: H, an alkyl group or a halogen,
- Vd and V'd, which may be identical or different, represent H, a halogen or a group R, OR, OCOR, NHCOH, OH, NH₂, NHR, N(R)₂, (R)₂N⁺O⁻, NHCOR, CO₂H, CO₂R, CN, CONH₂, CONHR or CONR₂, in which R, which may be identical or different, are chosen from alkyl, aryl, aralkyl, alkaryl, alkene and organosilyl groups, optionally perfluorinated and optionally substituted with one or more carboxyl, epoxy, hydroxyl, alkoxy, amino, halogen or sulphonic groups,
- t is 0 or 1.

10. Latex according to the preceding claim, **characterized in that** the ethylenically unsaturated monomer(s) is (are) chosen from: styrene or its derivatives, butadiene, chloroprene, (meth)acrylic esters and vinyl nitriles.

11. Latex according to any one of the preceding claims, **characterized in that** the polymer containing residual ethylenically unsaturated bonds is obtained by free-radical polymerization of at least one ethylenically unsaturated monomer chosen from:
CXdX'd (=CVd-CV'd)ₜ=CH₂
- Xd and X'd, which may be identical or different, represent: H, an alkyl group or a halogen,
- Vd and V'd, which may be identical or different, represent H, a halogen or a group R, OR, OCOR, NHCOH, OH, NH₂, NHR, N(R)₂, (R)₂N⁺O⁻, NHCOR, CO₂H, CO₂R, CN, CONH₂, CONHR or CONR₂, in which R, which may be identical or different, are chosen from alkyl, aryl, aralkyl, alkaryl, alkene and organosilyl groups, optionally perfluorinated and optionally substituted with one or more carboxyl, epoxy, hydroxyl, alkoxy, amino, halogen or sulphonic groups,
- t is 0 or 1.

12. Latex according to any one of the preceding claims, **characterized in that** the polymerization is carried out by introducing the ethylenically unsaturated monomer and the initiator into a solution of monoblock, diblock or triblock polymer.

13. Latex according to any one of Claims 1 to 12, **characterized in that** the polymerization is carried out by introducing in parallel the ethylenically unsaturated monomer, the initiator and a solution of monoblock, diblock or triblock polymer.

14. Latex according to any one of Claims 1 to 12, **characterized in that** the polymerization is carried out by introducing the monoblock, diblock or triblock polymer and the initiator into a suspension comprising the polymer containing residual ethylenically unsaturated bonds.

15. Redispersible powders that may be obtained by drying the latex of modified surface chemistry according to any one of Claims 1 to 14.

16. Powders according to the preceding claim, **characterized in that** the drying is performed in the presence of a drying adjuvant.

17. Formulations intended for applications in the building materials industry, comprising the latex with modified surface chemistry according to any one of Claims 1 to 14, or a redispersible powder obtained according to either of Claims 15 and 16.

18. Formulations intended for applications in the paints industry, comprising the latex with modified surface chemistry according to any one of Claims 1 to 14, or a redispersible powder obtained according to either of Claims 15 and 16.

19. Formulations intended for applications in the adhesives and pressure-sensitive adhesives industry, comprising the latex with modified surface chemistry according to any one of Claims 1 to 14, or a redispersible powder obtained according to either of Claims 15 and 16.

20. Formulations intended for applications in the paper industry, comprising the latex with modified surface chemistry according to any one of Claims 1 to 14, or a redispersible powder obtained according to either of Claims 15 and 16.

21. Use of a latex with modified surface chemistry according to any one of Claims 1 to 14, or of a redispersible powder obtained according to either of Claims 15 and 16, in formulations intended for applications in the building materials industry.

22. Use of a latex with modified surface chemistry according to any one of Claims 1 to 14, or of a redispersible powder obtained according to either of Claims 15 and 16, in formulations intended for applications in the paints industry.

23. Use of a latex with modified surface chemistry according to any one of Claims 1 to 14, or of a redispersible powder obtained according to either of Claims 15 and 16, in formulations intended for applications in the adhesives and pressure-sensitive adhesives industry.

24. Use of a latex with modified surface chemistry according to any one of Claims 1 to 14, or of a redispersible powder obtained according to either of Claims 15 and 16, in formulations intended for applications in the paper industry.

## Patentansprüche

1. Latex mit modifizierter Oberflächenchemie, dessen Erhalt unter Durchführung einer radikalischen Emulsionspolymerisation in Gegenwart von folgendem möglich ist:
- mindestens einem ethylenisch ungesättigten Monomer oder mindestens einem Polymer, das ethylenisch ungesättigte Restbindungen besitzt,
- mindestens einem radikalischen Polymerisationsstarter,
- mindestens einem in Wasser löslichen und/oder dispergierbaren Ein-, Zwei- oder Dreiblockpolymer, das an seinem äußeren Ende eine aktive Gruppe umfasst, die ein Radikal zu bilden vermag und aus Thioethern-Thionen, Dithiocarbamaten und Xanthaten ausgewählt ist.

2. Latex nach dem vorhergehenden Anspruch, **dadurch gekennzeichnet, dass** die radikalische Polymerisation in Gegenwart eines Polymers durchgeführt wird, das der folgenden Formel entspricht:
(R¹¹)x-Z¹¹-C(=S)-Z¹²-[A]-R¹² (I)
wobei in der Formel:
- Z¹¹ C, N oder O darstellt;
- Z¹² S darstellt,
- R¹¹ und R¹², die gleich oder verschieden sind, folgendes darstellen:
• eine Alkyl-, Acyl-, Aryl-, Alken- oder Alkingruppe, die gegebenenfalls substituiert ist, oder
• einen gesättigten oder ungesättigten gegebenenfalls substituierten oder aromatischen Carbocyclus, oder
• einen gesättigten oder ungesättigten Heterocyclus, der gegebenenfalls substituiert ist,
wobei diese Gruppen und Cyclen (i), (ii) und (iii) durch substituierte Phenylgruppen, substituierte aromatische Gruppen oder folgende Gruppen substituiert sein können: Alkoxycarbonyl oder Aryloxycarbonyl (-COOR), Carboxy (-COOH), Acyloxy (-O₂CR), Carbamoyl (-CONR₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR₂), Halogen, Allyl, Epoxy, Alkoxy (-OR), S-Alkyl, S-Aryl, Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), und kationischen Substituenten (quaternäre Ammoniumsalze),
wobei R eine Alkyl- oder Arylgruppe darstellt,
- x der Valenz von Z¹¹ entspricht, oder
- x die Wertigkeit 0 besitzt und in diesem Fall Z¹¹ einen Phenyl-, Alken- oder Alkinrest, der gegebenenfalls mit einer Alkyl-, Acyl-, Aryl-, Alken- oder Alkingruppe substituiert ist, die gegebenenfalls substituiert ist; einen gegebenenfalls substituierten gesättigten, ungesättigten oder aromatischen Carbocyclus; einen gegebenenfalls substituierten gesättigten oder ungesättigten Heterocyclus; Alkoxycarbonyl- oder Aryloxycarbonyl- (-COOR); Carboxy- (-COOH); Acyloxy- (O₂CR); Carbamoyl- (-CONR₂); Cyano- (-CN); Alkylcarbonyl-; Alkylarylcarbonyl-; Arylcarbonyl-; Arylalkylcarbonyl-; Phthalimido-; Maleimido-; Succinimido-; Amidino-; Guanidimo-; Hydroxy- (OH); Amino-(-NR₂); Halogen-; Allyl-; Epoxy-; Alkoxy- (-OR); S-Alkyl-; S-Arylgruppen; Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze) darstellt;
- A ein Ein-, Zwei- oder Dreiblockpolymer darstellt.

3. Latex nach Anspruch 1, **dadurch gekennzeichnet, dass** die Polymerisation in Gegenwart eines Polymers durchgeführt wird, das den folgenden Formeln entspricht: 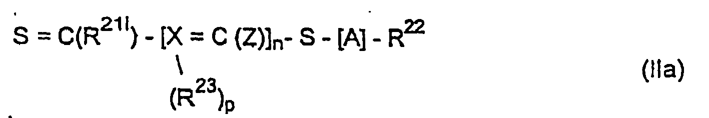 und/oder: 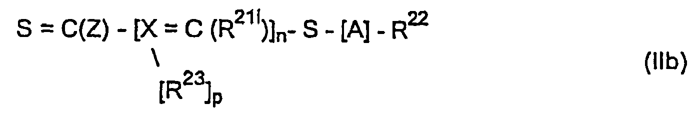 wobei in den Formeln:
- X ein Atom darstellt, das aus C ausgewählt ist;
- R²² folgendes darstellt:
• (i) eine gegebenenfalls substituierte Alkyl-, Acyl-, Aryl-, Alken- oder Alkingruppe, oder
• (ii) einen gesättigten oder ungesättigten, gegebenenfalls substituierten oder aromatischen Carbocyclus, oder
• (iii) einen gesättigten oder ungesättigten, gegebenenfalls substituierten oder aromatischen Heterocyclus,
wobei diese Gruppen und Cyclen (i), (ii) und (iii) durch substituierte Phenylgruppen, aromatische substituierte Gruppen oder folgende Gruppen substituiert sein können: Alkoxycarbonyl oder Aryloxycarbonyl (-COOR), Carboxy (-COOH), Acyloxy (-O₂CR), Carbamoyl (-CONR₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR₂), Halogen, Allyl, Epoxy, Alkoxy (-OR), S-Alkyl, S-Aryl, Organosilyl, Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze),
wobei R eine Alkyl- oder Arylgruppe darstellt,
- Z, R²¹ⁱ, R²³ die gleich oder verschieden sind, ausgewählt sind aus:
• einem Wasserstoffatom,
• einer gegebenenfalls substituierten Alkyl-, Acyl-, Aryl-, Alken- oder Alkingruppe,
• einem gesättigten oder ungesättigten gegebenenfalls substituierten oder aromatischen Carbocyclus,
• einem gesättigten oder ungesättigten gegebenenfalls substituierten Heterocyclus,
• Alkoxycarbonyl- oder Aryloxycarbonyl- (-COOR), Carboxy- (-COOH), Acyloxy- (-O₂CR), Carbamoyl- (-CONR₂), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidimo-, Hydroxy- (-OH), Amino- (-NR₂), Halogen-, Allyl-, Epoxy-, Alkoxy-(-OR), S-Alkyl-, S-Aryl-, Organosilylgruppen, wobei R eine Alkyl- oder Arylgruppe darstellt,
• Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze),
- n > 0,
- i von 1 bis n variiert,
- p 0, 1 oder 2 ist, je nach Valenz von X
ferner:
- wenn X = C gilt, Z dann keine S-Alkyl- oder S-Aryl-Gruppe ist,
- die Gruppe R¹ⁱ, mit i = n, keine S-Alkyl- oder S-Aryl-Gruppe ist,
- A ein Ein-, Zwei- oder Dreiblockpolymer darstellt.

4. Latex nach Anspruch 1, **dadurch gekennzeichnet, dass** die Polymerisation in Gegenwart eines Polymers durchgeführt wird, das der folgenden Formel entspricht: 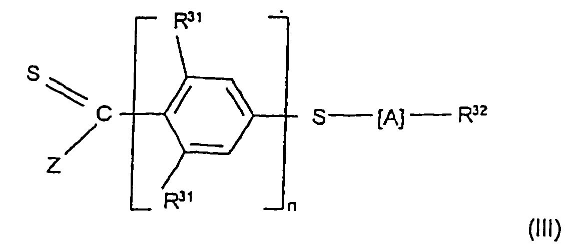 wobei in der Formel:
- R³² folgendes darstellt:
• (i) eine gegebenenfalls substituierte Alkyl-, Acyl-, Aryl-, Alken- oder Alkingruppe, oder
• (ii) einen gesättigten oder ungesättigten, gegebenenfalls substituierten oder aromatischen Carbocyclus, oder
• (iii) einen gesättigten oder ungesättigten, gegebenenfalls substituierten oder aromatischen Heterocyclus,
wobei diese Gruppen und Cyclen (i), (ii) und (iii) durch substituierte Phenylgruppen, aromatische substituierte Gruppen oder folgende Gruppen substituiert sein können: Alkoxycarbonyl oder Aryloxycarbonyl (-COOR), Carboxy (-COOH), Acyloxy (-O₂CR), Carbamoyl (-CONR₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR₂), Halogen, Allyl, Epoxy, Alkoxy (-OR), S-Alkyl, S-Aryl, Organosilyl, Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze),
wobei R eine Alkyl- oder Arylgruppe darstellt,
- Z ausgewählt ist aus:
• einem Wasserstoffatom,
• einer Alkyl-, Acyl-, Aryl-, Alken- oder Alkingruppe, die gegebenenfalls substituiert ist,
• einem gesättigten oder ungesättigten gegebenenfalls substituierten oder aromatischen Carbocyclus,
• einem gesättigten oder ungesättigten Heterocyclus, der gegebenenfalls substituiert ist,
• Alkoxycarbonyl- oder Aryloxycarbonyl- (-COOR), Carboxy- (-COOH), Acyloxy- (-O₂CR), Carbamoyl- (-CONR₂), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidimo-, Hydroxy- (-OH), Amino- (-NR₂), Halogen-, Allyl-, Epoxy-, Alkoxy- (-OR), S-Alkyl-, S-Aryl-, Organosilylgruppen, wobei R eine Alkyl- oder Arylgruppe darstellt,
• Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze),
- R³¹, gleich oder verschieden, ausgewählt ist aus:
• einem Wasserstoffatom,
• einer Alkyl-, Acyl-, Aryl-, Alken- oder Alkingruppe, die gegebenenfalls substituiert ist,
• einem gesättigten oder ungesättigten gegebenenfalls substituierten oder aromatischen Carbocyclus,
• einem gesättigten oder ungesättigten Heterocyclus, der gegebenenfalls substituiert ist,
• Alkoxycarbonyl- oder Aryloxycarbonyl- (-COOR), Carboxy- (-COOH), Acyloxy- (-O₂CR), Carbamoyl- (-CONR₂), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidimo-, Hydroxy- (-OH), Amino- (-NR₂), Halogen-, Allyl-, Epoxy-, Alkoxy- (-OR), S-Alkyl-, S-Aryl-, Organosilylgruppen, wobei R eine Alkyl- oder Arylgruppe darstellt,
• Gruppen, die einen hydrophilen oder ionischen Charakter aufweisen, wie alkalische Salze von Carbonsäuren, alkalische Salze von Sulfonsäure, Polyalkylenoxidketten (POE, POP), kationische Substituenten (quaternäre Ammoniumsalze),
• SR³²-Gruppen
- n > 0,
- A ein Ein-, Zwei- oder Dreiblockpolymer darstellt.

5. Latex nach Anspruch 1, **dadurch gekennzeichnet, dass** die Polymerisation in Gegenwart eines Polymers durchgeführt wird, das der folgenden Formel entspricht:
S=C(Z)-[C≡C]ₙ-S-[A]-R⁴¹ (IV)
wobei in der Formel:
- R⁴¹ folgendes darstellt:
• (i) eine gegebenenfalls substituierte Alkyl-, Acyl-, Aryl-, Alken- oder Alkingruppe, oder
• (ii) einen gesättigten oder ungesättigten, gegebenenfalls substituierten oder aromatischen Carbocyclus, oder
• (iii) einen gesättigten oder ungesättigten, gegebenenfalls substituierten oder aromatischen Heterocyclus,
wobei diese Gruppen und Cyclen (i), (ii) und (iii) durch substituierte Phenylgruppen, aromatische substituierte Gruppen oder folgende Gruppen substituiert sein können: Alkoxycarbonyl oder Aryloxycarbonyl (-COOR), Carboxy (-COOH), Acyloxy (-O₂CR), Carbamoyl (-CONR₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR₂), Halogen, Allyl, Epoxy, Alkoxy (-OR), S-Alkyl, S-Aryl, Organosilyl, Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze),
wobei R eine Alkyl- oder Arylgruppe darstellt,
- Z, gleich oder verschieden, ausgewählt ist aus:
• einem Wasserstoffatom,
• einer Alkyl-, Acyl-, Aryl-, Alken- oder Alkingruppe, die gegebenenfalls substituiert ist,
• einem gesättigten oder ungesättigten gegebenenfalls substituierten oder aromatischen Carbocyclus,
• einem gesättigten oder ungesättigten Heterocyclus, der gegebenenfalls substituiert ist,
• Alkoxycarbonyl- oder Aryloxycarbonyl- (-COOR), Carboxy- (-COOH), Acyloxy- (-O₂CR), Carbamoyl- (-CONR₂), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidimo-, Hydroxy- (-OH), Amino- (-NR₂), Halogen-, Allyl-, Epoxy-, Alkoxy- (-OR), S-Alkyl-, S-Aryl-, Organosilylgruppen, wobei R eine Alkyl- oder Arylgruppe darstellt,
• Gruppen, die einen hydrophilen oder ionischen Charakter aufweisen, ausgewählt aus alkalischen Salzen von Carbonsäuren, alkalischen Salzen von Sulfonsäure, Polyalkylenoxidketten (POE, POP), kationischen Substituenten (quaternäre Ammoniumsalze),
- n > 0,
- A ein Ein-, Zwei- oder Dreiblockpolymer darstellt.

6. Latex nach Anspruch 1, **dadurch gekennzeichnet, dass** die Polymerisation in Gegenwart eines Polymers durchgeführt wird, das der folgenden Formel entspricht:
S=C(OR⁵¹)-S-[A]-R⁵² (V)
wobei in der Formel
- R⁵¹ folgendes darstellt: 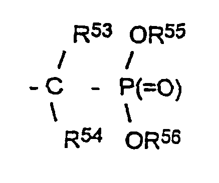
wobei:
R⁵³, R⁵⁴, die gleich oder verschieden sind, aus den Gruppen Halogen, =O, =S, -NO₂, -SO₃R, NCO, CN, OR, -SR, -NR₂, -COOR, O₂CR, -CONR₂, -NCOR₂ ausgewählt sind, wobei R ein Wasserstoffatom oder einen Alkyl-, Alkenyl-, Alkinyl-, Cycloalkenyl-, Cycloalkinyl-, Arylrest, der gegebenenfalls mit einem aromatischen oder nichtaromatischen Heterocyclus kondensiert ist, Alkylaryl, Aralkyl, Heteroaryl darstellt; wobei diese Reste gegebenenfalls mit einem oder mehreren Gruppen, die gleich oder verschieden sind, substituiert sein können, die ausgewählt sind aus Halogenen, =O, =S, OH, Alkoxy, SH, Thioalkoxy, NH₂, Mono- oder Dialkylamino, CN, COOH, Ester, Amid, CF₃ und/oder gegebenenfalls unterbrochen mit einem oder mehreren Atomen, ausgewählt aus O, S, N, P; oder aus einer heterocyclischen Gruppe, die gegebenenfalls mit einer oder mehreren Gruppen, wie zuvor definiert, substituiert ist;
oder R⁵³ und R⁵⁴ zusammen mit dem Kohlenstoffatom, an das sie gebunden sind, einen Carbo- oder Heterocyclus bilden;
- R⁵³, R⁵⁶, die gleich oder verschieden sind, eine Gruppe wie zuvor für R definiert darstellen; oder zusammen eine C₂-C₄-Kohlenwasserstoffkette bilden, die gegebenenfalls mit einem Heteroatom, ausgewählt aus O, S und N, unterbrochen ist;
- R⁵² die gleiche Definition wie die für R⁵³ gegebene besitzt;
- A ein Ein-, Zwei- oder Dreiblockpolymer darstellt.

7. Latex nach einem der vorhergehenden Ansprüche, **dadurch gekennzeichnet, dass** das Polymer A mindestens einer der folgenden Formeln entspricht: 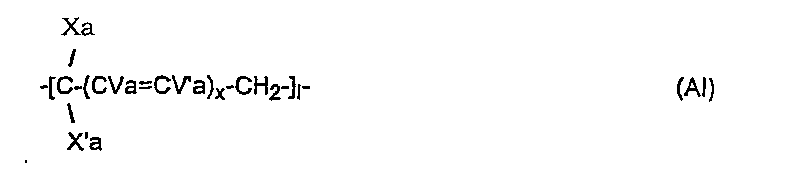 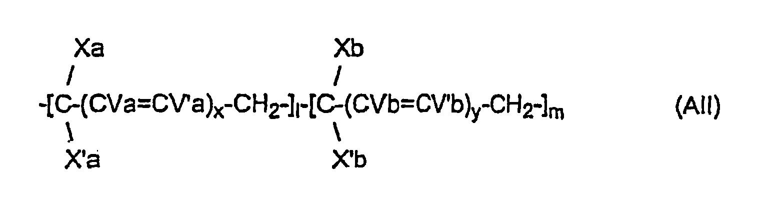 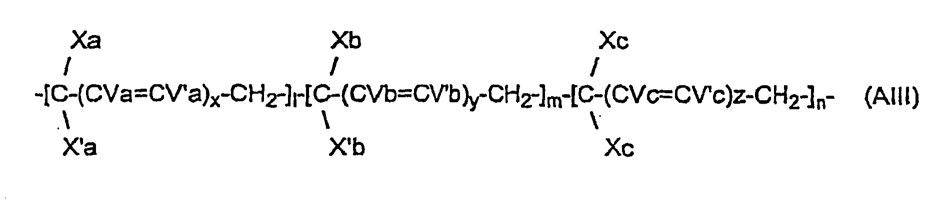 wobei in den Formeln:
- Va, V'a, Vb, V'b, Vc, V'c, die gleich oder verschieden sind, folgendes darstellen: H, eine Alkylgruppe oder ein Halogen;
- Xa, X'a, Xb, X'b, Xc, X'c, die gleich oder verschieden sind, folgendes darstellen: H, ein Halogen oder eine Gruppe R, OR, OCOR, NHCOH, OH, NH₂, NHR, N(R)₂, (R)₂N⁺O⁻, NHCOR, CO₂H, CO₂R, CN, CONH₂, CONHR oder CONR₂, wobei R, gleich oder verschieden, ausgewählt ist aus Alkyl-, Aryl-, Aralkyl-, Alkaryl-, Alken- oder Organosilylgruppen, die gegebenenfalls perfluoriert und gegebenenfalls mit einer oder mehreren Carboxyl-, Epoxy-, Hydroxyl-, Alkoxy-, Amino-, Halogen-, oder Sulfonsäuregruppen substituiert sind,
- l, m, n, gleich oder verschieden, größer oder gleich 1 sind,
- x, y, z, gleich oder verschieden, 0 oder 1 sind.

8. Latex nach einem der vorhergehenden Ansprüche, **dadurch gekennzeichnet, dass** das Polymer A eine Molmassenzahl unter 20000, vorzugsweise unter 10000 aufweist.

9. Latex nach einem der vorhergehenden Ansprüche, **dadurch gekennzeichnet, dass** das oder die ethylenisch ungesättigten Monomere ausgewählt sind aus:
CXdX'd (=CVd-CV'd)ₜ = CH₂
- Xd, X'd, gleich oder verschieden, stellen folgendes dar: H, eine Alkylgruppe oder ein Halogen,
- Vd, V'd, gleich oder verschieden, stellen folgendes dar: H, ein Halogen oder eine Gruppe R, OR, OCOR, NHCOH, OH, NH₂, NHR, N(R)₂, (R)₂N⁺O⁻, NHCOR, CO₂H, CO₂R, CN, CONH₂, CONHR oder CONR₂ darstellen, wobei R, gleich oder verschieden, ausgewählt ist aus den Gruppen Alkyl, Aryl, Aralkyl, Alkaryl, Alken oder Organosilyl, die gegebenenfalls perfluoriert und gegebenenfalls mit einer oder mehreren Carboxyl-, Epoxy-, Hydroxyl-, Alkoxy-, Amino-, Halogen- oder Sulfonsäuregruppen substituiert sind,
- t 0 oder 1 ist.

10. Latex nach dem vorhergehenden Anspruch, **dadurch gekennzeichnet, dass** das oder die ethylenisch ungesättigten Monomere ausgewählt sind aus: Styrol oder seinen Derivaten, Butadien, Chloropren, (Meth)acrylsäureestern und Vinylnitrilen.

11. Latex nach einem der vorhergehenden Ansprüche, **dadurch gekennzeichnet, dass** das Polymer ethylenisch ungesättigte Restbindungen besitzt und durch radikalische Polymerisation von mindestens einem ethylenisch ungesättigten Monomer erhalten wird, ausgewählt aus
CXdX'd (=CVd-CV'd)ₜ = CH₂
- Xd, X'd, gleich oder verschieden, stellen folgendes dar: H, eine Alkylgruppe oder ein Halogen,
- Vd, V'd, gleich oder verschieden, stellen folgendes dar: H, ein Halogen oder eine Gruppe R, OR, OCOR, NHCOH, OH, NH₂, NHR, N(R)₂, (R)₂N⁺O⁻, NHCOR, CO₂H, CO₂R, CN, CONH₂, CONHR oder CONR₂, wobei R, gleich oder verschieden, ausgewählt ist aus den Gruppen Alkyl, Aryl, Aralkyl, Alkaryl, Alken oder Organosilyl, die gegebenenfalls perfluoriert und gegebenenfalls mit einer oder mehreren Carboxyl-, Epoxy-, Hydroxyl-, Alkoxy-, Amino-, Halogen- oder Sulfonsäuregruppen substituiert sind,
- t 0 oder 1 ist.

12. Latex nach einem der vorhergehenden Ansprüche, **dadurch gekennzeichnet, dass** die Polymerisation durch Einbringen des ethylenisch ungesättigten Monomers und des Starters in eine Ein-, Zwei- oder Dreiblockpolymer-Lösung durchgeführt wird.

13. Latex nach einem der Ansprüche 1-12, **dadurch gekennzeichnet, dass** die Polymerisation durch gleichzeitiges Einbringen des ethylenisch ungesättigten Monomers und des Starters und einer Ein-, Zwei- oder Dreiblockpolymer-Lösung durchgeführt wird.

14. Latex nach einem der Ansprüche 1-12, **dadurch gekennzeichnet, dass** die Polymerisation durch Einleiten des Ein-, Zwei- oder Dreiblockpolymers und des Starters in eine Suspension, die das Polymer umfasst, das ethylenisch ungesättigte Restbindungen aufweist, durchgeführt wird.

15. Redispergierbare Pulver, deren Erhalt unter Durchführung einer Trocknung des Latex mit modifizierter Oberflächenchemie nach einem der Ansprüche 1 bis 14 möglich ist.

16. Pulver nach dem vorhergehenden Anspruch, **dadurch gekennzeichnet, dass** die Trocknung in Gegenwart eines Trocknungshilfsmittels durchgeführt wird.

17. Formulierungen, die für Anwendungen im Bereich der Baumaterialien bestimmt sind, umfassend den Latex mit modifizierter Oberflächenchemie nach einem der Ansprüche 1 bis 14 oder ein redispergierbares Pulver, erhalten nach einem der Ansprüche 15 oder 16.

18. Formulierungen, die für Anwendungen im Bereich der Anstrichfarben bestimmt sind, umfassend den Latex mit modifizierter Oberflächenchemie nach einem der Ansprüche 1 bis 13 oder ein redispergierbares Pulver, erhalten nach einem der Ansprüche 15 oder 16.

19. Formulierungen, die für Anwendungen im Bereich der Klebstoffe und Haftklebstoffe bestimmt sind, umfassend den Latex mit modifizierter Oberflächenchemie nach einem der Ansprüche 1 bis 14 oder ein redispergierbares Pulver, erhalten nach einem der Ansprüche 15 oder 16.

20. Formulierungen, die für Anwendungen im Bereich des Papiers bestimmt sind, umfassend den Latex mit modifizierter Oberflächenchemie nach einem der Ansprüche 1 bis 14 oder ein redispergierbares Pulver, erhalten nach einem der Ansprüche 14 oder 16.

21. Verwendung eines Latex mit modifizierter Oberflächenchemie nach einem der Ansprüche 1 bis 14 oder eines redispergierbaren Pulvers, erhalten nach einem der Ansprüche 15 oder 16 in Formulierungen, die für Anwendungen im Bereich der Baumaterialien bestimmt sind.

22. Verwendung eines Latex mit modifizierter Oberflächenchemie nach einem der Ansprüche 1 bis 14 oder eines redispergierbaren Pulvers, erhalten nach einem der Ansprüche 15 oder 16, in Formulierungen, die für Anwendungen im Bereich der Anstrichfarben bestimmt sind.

23. Verwendung eines Latex mit modifizierter Oberflächenchemie nach einem der Ansprüche 1 bis 14 oder eines redispergierbaren Pulvers, erhalten nach einem der Ansprüche 15 oder 16, in Formulierungen, die für Anwendungen im Bereich der Klebstoffe und Haftklebstoffe bestimmt sind.

24. Verwendung eines Latex mit modifizierter Oberflächenchemie nach einem der Ansprüche 1 bis 14 oder eines redispergierbaren Pulvers, erhalten nach einem der Ansprüche 15 oder 16, in Formulierungen, die für Anwendungen im Bereich der Papiere bestimmt sind.
